# EUROPEAN PATENT APPLICATION

(11) **EP 3 908 053 A1**
(43) Date of publication of application: **10.11.2021**
(21) Application number: 19939115.2
(22) Date of filing: 01.08.2019
(51) Int. Cl.: H04W 72/02, H04W 72/10

(54) **COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: LU, Qianxi, Dongguan, Guangdong 523860 (CN)
(74) Representative: Taor, Simon Edward William
(86) International application number: PCT/CN2019/098846
(87) International publication number: WO 2021/016982

(57) **Abstract**

Embodiments of the present application relate to a communication method, a terminal device, and a network device. The method comprises: if a physical uplink control channel (PUCCH) resource used by a terminal device for transmitting a first scheduling request (SR) and a physical uplink shared channel (PUSCH) resource that transmits a first media access control (MAC) protocol data unit (PDU) overlap, the terminal device determines whether to prioritize transmitting the first SR. The communication method, terminal device, and network device in the embodiments of the present application may increase the possibility of the normal transmission of an HOT service.

## Description

### TECHNICAL FIELD

The present disclosure relates to the field of communications, and more particularly, to a communication method, a terminal device, and a network device.

### BACKGROUND

A 5G system introduces the concept of Industrial Internet of Things (IIoT). IIoT can support transmission of services such as factory automation, transport industry, and electrical power distribution in the 5G system.

Therefore, how to ensure normal transmission of an IIoT service is an urgent problem to be solved.

### SUMMARY

Embodiments of the present disclosure provide a communication method, a terminal device, and a network device, which can improve a possibility of normal transmission of an IIoT service.

In a first aspect, there is provided a communication method. The method includes: if a physical uplink control channel (PUCCH) resource for transmitting a first scheduling request (SR) and a physical uplink shared channel (PUSCH) resource for transmitting a first media access control (MAC) protocol data unit (PDU) used by a terminal device overlap, determining, by the terminal device, whether to prioritize transmitting the first SR.

In a second aspect, there is provided a communication method. The method includes: determining, by a terminal device, whether to use a first logical channel prioritization order; wherein, the first logical channel prioritization order includes a priority of data of a logical channel carrying a first service, and the priority of the data of the logical channel carrying the first service is higher than a priority of a configured grant media access control (MAC) control unit (CE).

In a third aspect, there is provided a communication method. The method includes: if a physical uplink control channel (PUCCH) resource for transmitting a first scheduling request (SR) and a physical uplink shared channel (PUSCH) resource for transmitting a first media access control (MAC) protocol data unit (PDU) used by a terminal device overlap, prioritizing, by a network device, receiving the first SR.

In a fourth aspect, there is provided a communication method. The method includes: sending, by a network device, second information to a terminal device, wherein the second information is used for indicating whether the terminal device uses a first logical channel prioritization order; wherein, the first logical channel prioritization order includes a priority of data of a logical channel carrying a first service, and the priority of the data of the logical channel carrying the first service is higher than a priority of a configured grant media access control (MAC) control unit (CE).

In a fifth aspect, there is provided a terminal device, configured to perform the method according to any one of the first to second aspect or any of the implementations thereof.

Specifically, the terminal device includes functional modules, configured to perform the method in any one of the first to second aspect or any of the implementations thereof.

In a sixth aspect, there is provided a network device, configured to perform the method according to any one of the third to fourth aspect or any of the implementations thereof.

Specifically, the network device includes functional modules, configured to perform the method in any one of the third to fourth aspect or any of the implementations thereof.

In a seventh aspect, there is provided a terminal device, including a processor and a memory. The memory is configured to store a computer program, and the processor is configured to call and run the computer program stored in the memory to execute the method in any one of the first to second aspect or any of the implementations thereof.

In an eighth aspect, there is provided a network device, including a processor and a memory. The memory is configured to store a computer program, and the processor is configured to call and run the computer program stored in the memory to execute the method in any one of the third to fourth aspect or any of the implementations thereof.

In a ninth aspect, there is provided a device, configured to perform the method in any one of the first to fourth aspects or any of the implementations thereof.

Specifically, the device includes: a processor, configured to call and run a computer program from a memory, so that an apparatus installed with the device performs the method in any one of the first to fourth aspects or any of the implementations thereof.

Optionally, the device is a chip.

In a tenth aspect, there is provided a computer-readable storage medium, configured to store a computer program that causes a computer to perform the method in any one of the first to fourth aspects or any of the implementations thereof.

In an eleventh aspect, there is provided a computer program product, including computer program instructions, which cause the computer to perform the method in any one of the first to fourth aspects or any of the implementations thereof.

In a twelfth aspect, there is provided a computer program, which, when run on a computer, causes the computer to perform the method in any one of the first to fourth aspects or any of the implementations thereof.

In the above technical solutions, when the resource used for transmitting the SR overlaps with the resource used for transmitting the MAC PDU, the terminal device can determine whether to prioritize transmitting the SR. In this way, the terminal device may prioritize transmitting the SR in certain scenarios. As such, the network device may be ensured, to a certain extent, to know in time that there is an IIoT service that needs to be transmitted at present, so that the network device may schedule the IIoT service in time, thereby ensuring QoS of the IIoT service, and improving a possibility of normal transmission of the IIoT service.

### BRIEF DESCRIPTION OF THE DRAWINGS

FIG. 1 is a schematic diagram of a communication system architecture according to an embodiment of the present disclosure.
FIG. 2 is a schematic diagram of a communication method according to an embodiment of the present disclosure.
FIG. 3 is a schematic structural diagram of a MAC PDU provided by an embodiment of the present disclosure.
FIGS. 4 to 6 are schematic diagrams of another communication method according to an embodiment of the present disclosure.
FIG. 7 is a schematic block diagram of a terminal device according to an embodiment of the present disclosure.
FIG. 8 is a schematic block diagram of a terminal device according to an embodiment of the present disclosure.
FIG. 9 is a schematic block diagram of a network device according to an embodiment of the present disclosure.
FIG. 10 is a schematic block diagram of a network device according to an embodiment of the present disclosure.
FIG. 11 is a schematic block diagram of a communication device according to an embodiment of the present disclosure.
FIG. 12 is a schematic block diagram of a device according to an embodiment of the present disclosure.
FIG. 13 is a schematic block diagram of a communication system according to an embodiment of the present disclosure.

### DETAILED DESCRIPTION

Technical solutions in embodiments of the present disclosure will be described below with reference to drawings. The described embodiments are a part of the embodiments of the present disclosure, not all of the embodiments of the present disclosure. Based on the embodiments described herein, all other embodiments obtained by those of ordinary skill in the art without creative work shall fall within the protection scope of the present disclosure.

The technical solutions of embodiments of the present disclosure can be applied to various communication systems, such as: a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, a LTE Frequency Division Duplex (FDD) system, a LTE Time Division Duplex (TDD) system, an Advanced Long Term Evolution (LTE-A) system, a New Radio (NR) system, a NR system evolution system, a LTE-based Access To Unlicensed Spectrum (LTE-U) system, a NR-based Access To Unlicensed Spectrum (NR-U) system, a Universal Mobile Telecommunication System (UMTS), a Worldwide Interoperability for Microwave Access (WiMAX) communication system, a Wireless Local Area Networks (WLAN), a Wireless Fidelity (WiFi), a next-generation communication system or another communication system, etc..

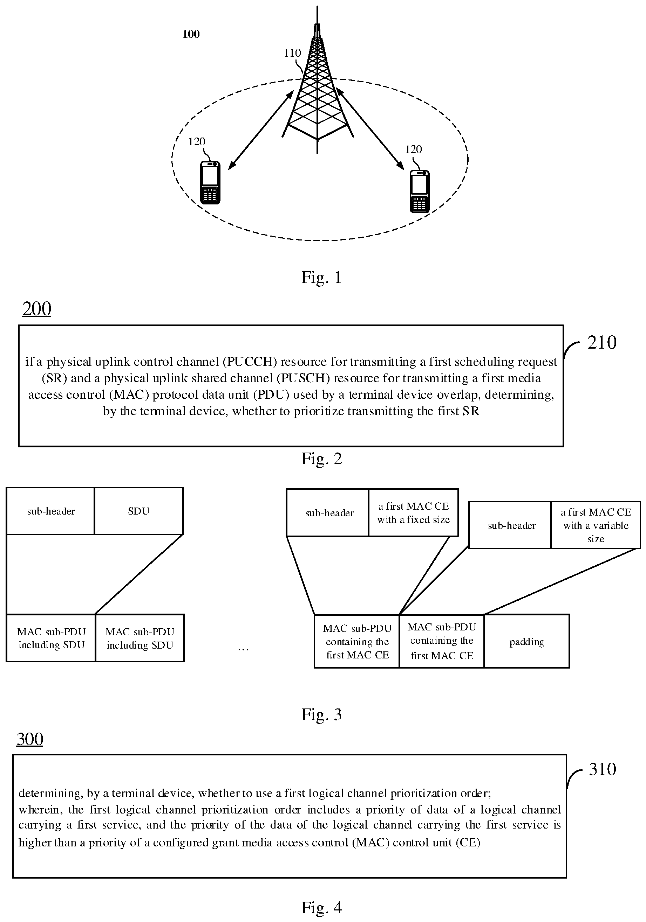

As an example, the communication system 100 applied in embodiments of the present disclosure may be as shown in FIG. 1. The communication system 100 includes a network device 110, and the network device 110 may be a device that communicates with a terminal device 120 (or called a communication terminal or a terminal). The network device 110 can provide communication coverage over a specific geographic area, and can communicate with terminal devices in the coverage area. According to embodiments, the network device 110 may be a base station (Base Transceiver Station, BTS) in a GSM system or a CDMA system, a base station (NodeB, NB) in a WCDMA system, an evolved base station (Evolutional Node B, eNB or eNodeB) in an LTE system, or a wireless controller in a Cloud Radio Access Network (CRAN). Alternatively, the network device may be a mobile switching center, a relay station, an access point, an on-vehicle device, a wearable device, a hub, a switch, a network bridge, a router, a network side device in a 5G network, or a network device in a future evolved Public Land Mobile Network (PLMN), etc.

The communication system 100 also includes at least one terminal device 120 within the coverage area of the network device 110. The "terminal device" as used herein may be connected in the following manners (including but not limited to): the terminal device may be connected via wired lines, such as via Public Switched Telephone Networks (PSTN), Digital Subscriber Line (DSL), digital cables, and direct cable connections; and/or the terminal may be connected via another data connection/network; and/or the terminal device may be connected via a wireless interface, such as cellular networks, wireless local area network (WLAN), digital TV networks such as DVB-H networks, satellite networks, AM-FM broadcast transmitter; and/or the terminal device is connected via a device of another terminal device which is configured to receive/send communication signals; and/or the terminal device is connected via an Internet of Things (IoT) device. A terminal device set as communicating through a wireless interface may be referred to as a "wireless communication terminal", a "wireless terminal" or a "mobile terminal". Examples of the mobile terminal include but are not limited to: satellite or cellular phone; Personal Communications System (PCS) terminal that can integrate a cellular radio phone with data processing, fax, and data communication capabilities; a PDA which can include a radio phone, a pager, an Internet/intranet access, a Web browser, a memo pad, a calendar, and/or Global Positioning System (GPS) receiver; and conventional laptop and/or palmtop receivers or other electronic device including a radio telephone transceiver. The terminal device can refer to access terminal, User Equipment (UE), user unit, user station, mobile station, mobile device, remote station, remote terminal, mobile equipment, user terminal, terminal, wireless communication equipment, user agent or user device. The access terminal can be a cellular phone, a cordless phone, a Session Initiation Protocol (SIP) phone, a Wireless Local Loop (WLL) station, a Personal Digital Assistant (PDA), a handheld device with wireless communication functions, a computing device or other processing device connected to a wireless modem, an in-vehicle device, a wearable device, a terminal device in 5G networks, or a terminal device in the future evolved PLMN, etc.

According to embodiments, Device to Device (D2D) communication may be performed between the terminal devices 120.

According to embodiments, the 5G system or the 5G network may also be referred to as a New Radio (NR) system or a NR network.

FIG. 1 exemplarily shows one network device and two terminal devices. According to other embodiments, the communication system 100 may include multiple network devices and the coverage of each network device may include other numbers of terminal devices, and embodiments of the present disclosure do not impose specific limitations in this regard.

According to embodiments, the communication system 100 may also include other network entities such as a network controller and a mobility management entity, and embodiments of the present disclosure do not impose specific limitations in this regard.

It should be understood that the devices with communication functions in the network/system in embodiments of the present disclosure may be referred to as communication devices. Taking the communication system 100 shown in FIG. 1 as an example, the communication devices may include the network device 110 and the terminal devices 120 with communication functions, and the network device 110 and the terminal devices 120 may be the devices described above, which will not be repeated here. The communication devices may also include other devices in the communication system 100, such as other network entities such as a network controller or a mobility management entity, and embodiments of the present disclosure do not impose specific limitations in this regard.

It should be understood that the terms "system" and "network" are often used interchangeably herein.

In a communication process between the terminal device and the network device, a scheduling request (SR) is used for requesting an uplink resource. The network device can configure zero, one, or multiple SR configurations for a transmission media access control (MAC) layer of the terminal device. One SR can correspond to a set of physical uplink control channel (PUCCH) resources, and one SR configuration can correspond to one or more logical channels. When certain conditions are met, a buffer state report (BSR) can trigger a corresponding SR.

On the terminal device side, a resource conflict (also called resource overlap) issue may occur. For example, there may be conflict between a PUCCH resource used for transmitting the SR and a physical uplink shared channel (PUSCH) resource used for transmitting a media access control (MAC) protocol data unit (PDU). According to an existing protocol, when the PUCCH resource used for transmitting the SR conflicts with the PUSCH resource used for transmitting the MAC PDU, the terminal device will not transmit the SR. In this case, for an IIoT service, the network device may not know that there is an IIoT service that needs to be transmitted at present, which may cause the network device delays to schedule the IIoT service, resulting in a problem of an IIoT service transmission delay, and failing to ensure quality of service (QoS) of the IIoT service, which cannot be tolerated in IIoT.

In view of above, embodiments of the present disclosure propose a communication method, which can improve a possibility of normal transmission of an IIoT service. It should be understood that the SR in the embodiments of the present disclosure may be a scheduling request of the IIoT service, or a scheduling request of another service.

FIG. 2 is a schematic diagram of a communication method 200 according to an embodiment of the present disclosure. The method described in FIG. 2 may be executed by the terminal device, and the terminal device may be, for example, the terminal device 120 shown in FIG. 1. As shown in FIG. 2, the method 200 may include at least part of the following content.

It should be understood that the method 200 may be applied in multiple communication scenarios. For example, the method 200 may be applied in the following scenarios: there is an overlap between data channels, there is an overlap between a data channel and a control channel, and there is an overlap between control channels. The control channel may also be understood as uplink control information (UCI), which may be at least one of the following: a hybrid automatic repeat request (HARQ) feedback, a channel state information reference signal (CSI-RI), and the SR.

In 210, if a PUCCH resource for transmitting a first SR and a PUSCH resource for transmitting a first MAC PDU used by the terminal device overlap, the terminal device determines whether to prioritize transmitting the first SR.

The first SR may be a SR corresponding to a first logical channel, and/or the first SR may be a SR triggered by a first service. The first service corresponds to the first logical channel. That is, the first service is carried on the first logical channel.

Optionally, the first service may be a service with a strict QoS requirement, such as a URLLC service, an IIoT service, and a time sensitive network (TSN) service. Of course, the first service may also be an enhanced mobile broadband (eMBB) service, a vertical industry service, an voice over long-term evolution (VoLTE) service, a vehicle networking service, etc.

It should be understood that the term "and/or" herein describes only an association relationship between associated objects, and represents that there may be three relationships. For example, A and/or B may represent that: A exists alone, A and B exist simultaneously, and B exists alone.

It should also be understood that the terminal device transmitting the first SR and transmitting the first MAC PDU in the foregoing content may also be expressed as: the terminal device sending the first SR and sending the first MAC PDU.

In embodiments of present disclosure, there are four scenarios in which the PUCCH resource and the PUSCH resource overlap (for ease of description, the PUCCH resource is called a first PUCCH resource, and the PUSCH resource is called a first PUSCH resource) as follows:
(1) a priority of the first SR is low, and the first MAC PDU has not yet been packetized when the first SR is triggered. In this case, for a MAC layer of the terminal device, since the priority of the first SR is low, the first MAC PDU is packetized and the MAC layer prioritizes transmitting the first MAC PDU to a physical layer without transmitting the first SR.
(2) the priority of the first SR is low, and the first MAC PDU has been packetized when the first SR is triggered. In this case, the MAC layer of the terminal device does not instruct the physical layer to transmit the first SR.
(3) the priority of the first SR is high, and the first MAC PDU has been packetized when the first SR is triggered. In this case, for the MAC layer of the terminal device, since the priority of the first SR is high, the first MAC PDU is a deprioritized MAC PDU.
(4) the priority of the first SR is high, and the first MAC PDU has not yet been packetized when the first SR is triggered.

The overlap between the first PUCCH resource and the first PUSCH resource may be understood as follows. The first PUCCH resource and the first PUSCH resource have an overlapping part in a time domain. Alternatively, the first PUCCH resource and the first PUSCH resource have an overlapping part in a frequency domain. Alternatively, the first PUCCH resource and the first PUSCH resource have an overlapping part in a time-frequency domain (that is, parts that overlap both in the time domain and in the frequency domain).

The overlap between the first PUCCH resource and the first PUSCH resource may also be understood as follows. The first PUCCH resource and the first PUSCH resource overlap completely or partially.

Optionally, the terminal device determining whether to prioritize transmitting the first SR may be understood as at least one of the following: when the first PUCCH resource and the first PUSCH resource overlap, the terminal device determines whether to prioritize transmitting the first SR; the terminal device determines whether to prioritize transmitting the first SR in a part where the first PUCCH resource and the first PUSCH resource overlap; the terminal device determines whether to prioritize transmitting the first SR in a part where the first PUCCH resource and the first PUSCH resource do not overlap.

Optionally, the terminal device determining whether to prioritize transmitting the first SR may refer to at least one of the following situations: the terminal device determines whether to instruct the physical layer at the MAC layer to prioritize transmitting the first SR, the terminal device determines whether to prioritize transmitting the first SR to the physical layer at the MAC layer, and the terminal device determines whether to prioritize transmitting the first SR to the network device at the physical layer.

It should be understood that embodiments of the present disclosure do not limit a name of the first PUSCH resource. That is, it may also be expressed as another name. For example, the first PUSCH resource may also be expressed as an uplink-shared channel (UL-SCH) resource. Each grant can correspond to a resource. In embodiments of the present disclosure, the grant may also be understood as a resource. Therefore, the first PUSCH resource may also be expressed as a grant or an uplink grant (UL grant).

The grant allocated by the network device to the terminal device may include a configured grant and/or a dynamic grant. The configured grant may be semi-statically configured by the network device to the terminal device, and the dynamic grant may be dynamically scheduled by the network device to the terminal device. For example, the dynamic grant may be scheduled to the terminal device through downlink control information (DCI).

The following describes in detail implementations of the terminal device determining whether to prioritize transmitting the first SR.

In an implementation, when the first PUCCH resource and the first PUSCH resource overlap, in any case, the terminal device determines to prioritize transmitting the first SR.

In another implementation, the terminal device may determine whether to prioritize transmitting the first SR according to first information.

Optionally, the first information may be predefined. For example, it may be preset on the terminal device according to a protocol. Alternatively, the network device may send a first message, which includes the first information, to the terminal device. The first message may be carried in a radio resource control (RRC) signaling, or the first message may be carried in the DCI, or the first message may be carried in the MAC CE. Specifically, the network device may send the first message to the terminal device when configuring SR configuration information and logical channel configuration information.

The first information will be described in detail below.

In embodiments of the present disclosure, the first information may include but is not limited to at least one of the following information:
first indication information that the network device indicates whether to prioritize transmitting the first SR;
second indication information that the terminal device indicates at least one of the following to the network device: whether it has an ability to use a first logical channel prioritization (LCP) order, whether to use the first LCP order, and it will use the first LCP order;
a type of a first MAC control unit (CE) included in the first MAC PDU;
a resource attribute of the first PUCCH resource;
a resource attribute of the first PUSCH resource;
an attribute of a first logical channel corresponding to the first SR;
an attribute of a logical channel corresponding to the first MAC CE;
a reason for triggering the first MAC CE;
whether the first PUSCH resource is capable of carrying data of the first logical channel;
a time sequence for triggering the first SR and the first MAC PDU being packetized; and whether the first logical channel meets a LCP restriction of the first PUSCH resource; and a reason for triggering a random access procedure.

It should be understood that any one, any two, any three, any four, any five, any six, any seven, any eight or any nine of the above multiple conditions may be used as a first condition of embodiments of the present disclosure.

Optionally, the first logical channel corresponding to the first SR may be understood as follows. The first logical channel is a logical channel transmitted on the first PUCCH resource, that is, a logical channel transmitted on the first PUCCH resource that triggers the first SR. Alternatively, the first logical channel is a logical channel corresponding to data that triggers the first SR. That is, the first logical channel may be a logical channel contained in the first SR.

The logical channel corresponding to the first MAC CE may be understood as follows. The logical channel corresponding to the first MAC CE is a logical channel corresponding to information carried in the first MAC CE, or the logical channel corresponding to the first MAC CE is a logical channel transmitted on the first PUSCH resource, or the logical channel corresponding to the first MAC CE is a logical channel that triggers the first MAC CE.

Optionally, when the first indication information indicates whether the terminal device prioritizes transmitting the first SR, as an example, the first indication information may explicitly indicate whether the terminal device prioritizes transmitting the first SR.

Exemplarily, the first indication information may include one bit, wherein a bit "1" indicates that the terminal device prioritizes transmitting the first SR, and a bit "0" indicates that the terminal device dose not prioritize transmitting the first SR. Alternatively, the bit "1" indicates that the terminal device dose not prioritize transmitting the first SR, and the bit "0" indicates that the terminal device prioritizes transmitting the first SR. As another example, the first indication information may include multiple bits. If the multiple bits are the same, it indicates that the terminal device prioritizes transmitting the first SR. If at least two of the multiple bits are different, it indicates that the terminal device dose not prioritize transmitting the first SR. For example, if bits of the first indication information are "111", it indicates that the terminal device prioritizes transmitting the first SR; and if bits of the first indication information are "010", it indicates that the terminal device does not prioritize transmitting the first SR. As still another example, the first indication information may include multiple bits. If the multiple bits are the same and all bits are "1", it indicates that the terminal device prioritizes transmitting the first SR; and if the multiple bits are the same and all bits are "0", it indicates that the terminal device dose not prioritize transmitting the first SR.

As another example, the first indication information may implicitly indicate whether the terminal device prioritizes transmitting the first SR.

Exemplarily, the first indication information may indicate priorities of the first PUCCH resource and the first PUSCH resource. For example, the first indication information indicates that the priority of the first PUCCH resource is higher than the priority of the first PUSCH resource, and then the terminal device may determine to prioritize transmitting the first SR after receiving the first indication information.

Similar to the first indication information, implementations of the second indication information may refer to the implementations of the first indication information, wherein the second indication information indicates at least one of the following: whether the terminal device has the ability to use the first LCP order, whether to use the first LCP order, and the terminal device will use the first LCP order. For the sake of brevity of content, details are not repeated here.

Optionally, the attribute of the first PUCCH resource may include but is not limited to at least one of the following: a priority of the first PUCCH resource, an identifier of the first PUCCH resource, a period of the first PUCCH resource, a duration of the first PUCCH resource, and a modulation and coding scheme (MCS) level corresponding to the first PUCCH resource.

The duration of the first PUCCH resource may also be referred to as continuous time of the first PUCCH resource, and the MCS level corresponding to the first PUCCH resource may be understood as a MCS level used when information is transmitted on the first PUCCH resource.

In addition to the priority of the first PUCCH resource, the priority of the first PUCCH resource may also be understood as a priority of a certain logical channel among all the logical channels carried in the first PUCCH resource. For example, the certain logical channel may be a logical channel with the highest priority among all the logical channels carried in the first PUCCH resource, or it may be a logical channel with the lowest priority, or it may be any logical channel.

Optionally, the attribute of the first PUSCH resource may include but is not limited to at least one of the following: a priority of the first PUSCH resource, an identifier of the first PUSCH resource, a period of the first PUSCH resource, a duration of the first PUSCH resource, a MCS level corresponding to the first PUSCH resource, an attribute of a logical channel that the first PUSCH resource is capable of carrying, and service information that the first PUSCH resource is capable of carrying.

The duration of the first PUSCH resource may also be referred to as continuous time of the first PUSCH resource, and the MCS level corresponding to the first PUSCH resource may be understood as a MCS level used when information is transmitted on the first PUSCH resource.

In addition to the priority of the first PUSCH resource, the priority of the first PUSCH resource may also be understood as a priority of a certain logical channel among all the logical channels carried in the first PUSCH resource. For example, the certain logical channel may be a logical channel with the highest priority among all the logical channels carried in the first PUSCH resource, or it may be a logical channel with the lowest priority, or it may be any logical channel.

Optionally, the attribute of the logical channel may include but is not limited to at least one of the following: a priority of the logical channel, an identifier of the logical channel, and service information of a service carried by the logical channel.

If the logical channel includes multiple logical channels, the priority of the logical channel may be a priority of a logical channel with the highest priority among the multiple logical channels, or a priority of a logical channel with the lowest priority among the multiple logical channels, or a priority of any one of the multiple logical channels.

Optionally, the service information may include, but is not limited to, at least one of the following: a service priority, a service type, a service identifier, and a service quality of service (QoS).

Regarding the first LCP order, the first LCP order in embodiments of the present disclosure is a supplement and/or adjustment to an existing LCP order. The existing LCP order is as follows, where the priority is arranged from high to low:
a cell-radio network temporary identity (C-RNTI) MAC CE or data from an uplink common control channel (UL-CCCH);
a configured grant confirmation MAC CE;
a MAC CE for BSR with exception of BSR included for padding;
a single entry power headroom report (PHR) MAC CE or multiple entry PHR MAC CE;
data from any logical channel with exception of data from the UL-CCCH;
a MAC CE for recommended bit rate query;
a MAC CE for BSR included for padding.

Optionally, in embodiments of the present disclosure, in the first LCP order, a priority of data of the logical channel carrying the first service may be higher than a priority of the configured grant confirmation MAC CE, and/or, a priority of BSR MAC CE of the first service or the first logical channel may be higher than the priority of the configured grant confirmation MAC CE. The priority of the data of the logical channel carrying the first service may also be the priority of the data of the first logical channel.

Alternatively, in the first LCP order, the priority of the data of the logical channel carrying the first service may be higher than a priority of data carried by the cell-radio network temporary identity (C-RNTI) MAC CE or the uplink common control channel (UL-CCCH), and/or, the priority of the BSR MAC CE of the first service or the first logical channel is higher than the priority of the data carried by the C-RNTI MAC CE or the UL-CCCH.

Exemplarily, in embodiments of the present disclosure, the first LCP order may be any one of the following (a), (b), (c), and (d). In the following four possibilities of the first LCP order, priorities of information in each first LCP order is arranged from high to low.
(a):
   data of a logical channel carrying the first service (data from any logical channel associated to URLLC);
   data carried by the C-RNTI MAC CE or the UL-CCCH;
   the configured grant confirmation MAC CE;
   MAC CE for BSR with exception of BSR included for padding;
   the single entry power headroom report;
   data carried by a logical channel other than the UL-CCCH and the first logical channel (data from any logical channel, except for data from UL-CCCH and URLLC);
   MAC CE for recommended bit rate query
   MAC CE including MAC CE for BSR included for padding.
(b):
   BSR MAC CE of the first service and the first logical channel (MAC CE for BSR for URLLC);
   the data of the logical channel carrying the first service;
   the data carried by the C-RNTI MAC CE or the UL-CCCH;
   the configured grant confirmation MAC CE;
   MAC CE for BSR with exception of BSR included for padding and BSR MAC CE of the first service or the first logical channel;
   the single entry PHR MAC CE or multiple entry PHR MAC CE;
   the data carried by a logical channel other than the UL-CCCH and the first logical channel;
   MAC CE for recommended bit rate query;
   MAC CE including MAC CE for BSR included for padding.
(c):
   the data carried by the C-RNTI MAC CE or the UL-CCCH;
   the data of the logical channel carrying the first service;
   the configured grant confirmation MAC CE;
   MAC CE for BSR with exception of BSR included for padding;
   the single entry PHR MAC CE or multiple entry PHR MAC CE;
   the data carried by a logical channel other than the UL-CCCH and the first logical channel;
   MAC CE for recommended bit rate query;
   MAC CE including MAC CE for BSR included for padding.
(d):
   the data carried by the C-RNTI MAC CE or the UL-CCCH;
   the BSR MAC CE of the first service or the first logical channel;
   the data of the logical channel carrying the first service;
   the configured grant confirmation MAC CE;
   MAC CE for BSR with exception of BSR included for padding and BSR MAC CE of the first service or the first logical channel;
   the single entry PHR MAC CE or multiple entry PHR MAC CE;
   the data carried by a logical channel other than the UL-CCCH and the first logical channel;
   MAC CE for recommended bit rate query;
   MAC CE including MAC CE for BSR included for padding.

It should be noted that the above-mentioned four possibilities of the first LCP order are only for helping those skilled in the art to better understand the first LCP order, rather than limiting the scope of the first LCP order.

Optionally, the first MAC PDU in embodiments of the present disclosure may include multiple MAC sub-PDUs, and the MAC sub-PDU may include a service data unit (SDU) and its sub-header, or may include the first MAC CE and its sub-header, where the first MAC CE may be a fixed-size MAC CE or a variable-length MAC CE, for example, as shown in FIG. 3.

Optionally, the LCP restriction of the first PUSCH resource may indicate a requirement or restriction imposed on the first PUSCH resource when the first PUSCH resource is used to transmit information in the logical channel. If the first PUSCH resource meets the requirement or restriction, the data or information in the logical channel can be transmitted on the first PUSCH resource. For example, the LCP restriction may be as follows. The first PUSCH resource with a duration of 5 slots can transmit data of logical channel 1, and the first PUSCH resource with a duration of 2 slots can transmit data of logical channel 2 and logical channel 3.

Whether the first logical channel meets the LCP restriction of the first PUSCH resource mentioned in the foregoing content may be understood as: whether the LCP restriction of the first PUSCH resource (for example, the attribute of the first PUSCH resource) matches the first logical channel.

Regarding random access, after a cell search process, the terminal device has achieved downlink synchronization with the cell, and the terminal device can receive downlink data. However, the terminal device can perform uplink transmission only when it has achieved uplink synchronization with the cell. The terminal device may establish a connection with the cell and obtain the uplink synchronization through a random access (RA) procedure.

In general, the RA may be triggered by the following events.
(1) Initial Access.
   The terminal device may enter a RRC connected state (RRC_CONNECTED) from a RRC idle state (RRC_IDLE state).
(2) RRC Connection Re-establishment procedure.
(3) Handover.
   At this time, the terminal device is in a connected state and needs to establish the uplink synchronization with a new cell.
(4) In the RRC connected state, when the downlink data or the uplink data arrives, the uplink is in a "non-synchronized" state. In other words, DL or UL data arrives during RRC_CONNECTED when UL synchronization status is "non-synchronized".
(5) In the RRC connected state, when the uplink data arrives, there are no available PUCCH resources for SR transmission. In other words, UL data arrives during RRC_CONNECTED when there are no PUCCH resources for SR available.
(6) SR failure.
(7) Request by RRC upon synchronous reconfiguration.
(8) The terminal device transitions from a RRC inactive state, *i.e*., transition from RRC_INACTIVE state.
(9) To establish time alignment at SCell addition.
(10) The terminal device requests other system information (OSI).
(11) The terminal device needs to perform beam failure recovery.

In embodiments of the present disclosure, when the first information meets at least one of the following conditions, the terminal device may determine to prioritize transmitting the first SR: (1) the first indication information indicates the terminal device to prioritize transmitting the first SR; (2) the second indication information is carried in a second MAC CE, and a type of the second MAC CE is a first MAC CE type; (3) a type of the first MAC CE is the first MAC CE type; (4) the priority of the first PUSCH resource is lower than or equal to a first preset priority threshold; (5) the priority of the first PUCCH resource is higher than or equal to the first preset priority threshold; (6) the priority of the first PUSCH resource is lower than or equal to the priority of the first PUCCH resource; (7) the identifier of the first PUSCH resource is not a first resource identifier; (8) the identifier of the first PUSCH resource is a second resource identifier; (9) the identifier of the first PUCCH resource is the first resource identifier; (10) the period of the first PUSCH resource is greater than or equal to a preset PUSCH period threshold; (11) the period of the first PUCCH resource is less than or equal to a preset PUCCH period threshold; (12) the period of the first PUSCH resource is greater than or equal to the period of the first PUCCH resource; (13) a transmission duration of the first PUSCH resource is greater than or equal to a preset PUSCH transmission duration; (14) a transmission duration of the first PUCCH resource is less than or equal to a preset PUCCH transmission duration; (15) the transmission duration of the first PUSCH resource is greater than or equal to the transmission duration of the first PUCCH resource; (16) a MCS level used for transmitting the first PUSCH resource is greater than or equal to a preset MCS level; (17) a MCS level used for transmitting the first PUCCH resource is less than or equal to the preset MCS level; (18) the MCS level used for transmitting the first PUSCH resource is greater than or equal to the MCS level used for transmitting the first PUCCH resource; (19) the attribute of the logical channel that the first PUSCH resource is capable of carrying does not meet a set attribute of the logical channel; (20) the service information that the first PUSCH resource is capable of carrying does not meet set service information; (21) a priority of the logical channel corresponding to the first MAC CE is lower than or equal to a second preset priority threshold; (22) a priority of the first logical channel is higher than or equal to the second preset priority threshold; (23) the priority of the logical channel corresponding to the first MAC CE is lower than or equal to the priority of the first logical channel; (24) an identifier of the logical channel corresponding to the first MAC CE is not a first logical channel identifier; (25) the identifier of the logical channel corresponding to the first MAC CE is a second logical channel identifier; (26) an identifier of the first logical channel is the first logical channel identifier; (27) a service type of a service carried by the logical channel corresponding to the first MAC CE is not a first service type; (28) the service type of the service carried by the logical channel corresponding to the first MAC CE is a second service type; (29) a service type of a service carried by the first logical channel is the first service type; (30) a priority of the service carried by the logical channel corresponding to the first MAC CE is lower than or equal to a priority of the service carried by the first logical channel; (31) the priority of the service carried by the logical channel corresponding to the first MAC CE is lower than or equal to a preset service priority; (32) the priority of the service carried by the first logical channel is higher than or equal to the preset service priority; (33) the reason for triggering the first MAC CE is a specific reason; (34) the priority of the first logical channel is higher than or equal to the priority of the logical channel corresponding to the first MAC CE, and the first PUSCH resource is not capable of carrying the data of the first logical channel; (35) the priority of the first logical channel is higher than or equal to the priority of the logical channel corresponding to the first MAC CE, and the first SR is triggered after the first MAC PDU is packetized; (36) the first SR is triggered before the first MAC PDU is packetized, and the first PUSCH resource is not capable of carrying the data of the first logical channel; (37) the first SR is triggered before the first MAC PDU is packetized, and the first logical channel does not meet the LCP restriction of the first PUSCH resource; (38) the reason for triggering the RA is positioning; (39) the reason for triggering the RA is that in a RRC connected state, uplink data arrives and there is no available uplink resource, and a logical channel that triggers the random access procedure is not a specific logical channel; (40) the reason for triggering the RA is that in the RRC connected state, the uplink data arrives and there is no available uplink resource, and the logical channel that triggers the random access procedure is a second logical channel; (41) the reason for triggering the RA is that in the RRC connected state, the uplink data arrives and there is no available uplink resource, and the logical channel that triggers the random access procedure is not a logical channel where a first service is located; (42) the reason for triggering the RA is that in the RRC connected state, the uplink data arrives and there is no available uplink resource, and the logical channel that triggers the RA is a logical channel where a second service is located; (43) the reason for triggering the RA is that in the RRC connected state, the uplink data arrives and there is no available uplink resource, and the priority of the logical channel that triggers the RA is lower than a third preset priority threshold; (44) the reason for triggering the RA is that in the RRC connected state, the uplink data arrives and there is no available uplink resource, and the priority of the logical channel that triggers the random access procedure is lower than the priority of the first logical channel; (45) the reason for triggering the RA is that other system information is requested by the terminal device; (46) the reason for triggering the RA is that the TA is added by the terminal device at the Scell; (47) the reason for triggering the RA is beam failure recovery.

The first type of MAC CE may be, but is not limited to, any of the following: the C-RNTI MAC CE, a first type of MAC SDU, the configured grant confirmation MAC CE, MAC CE for BSR with exception of BSR included for padding; the single entry PHR MAC CE, multiple entry PHR MAC CE, BSR MAC CE triggered by a service other than the first service and BSR MAC CE triggered by a logical channel other than the first logical channel.

It should be understood that, in embodiments of the present disclosure, the first type of MAC SDU may have the same function as the first type of MAC CE.

The first type of MAC CE may be predefined, or the first type of MAC CE may be determined by the terminal device. In this way, new radio signaling overhead is avoided, it is more in line with current service transmission requirements and specificity, and the terminal device can have more degrees of freedom. Of course, the first type of MAC CE may also be configured or indicated by the network device. For example, the network device may send third information to the terminal device, and the third information is used for configuring or indicating the first type of MAC CE.

Optionally, the specific reason mentioned in the foregoing content may include at least one of the following reasons:
a reason for triggering the first MAC CE is the random access;
the first MAC CE is used for activating or deactivating the configured grant;
the first MAC CE is triggered by the BSR;
the first MAC CE is triggered by a BSR of the first service (such as a URLLC service); and
the first MAC CE is not triggered by the BSR of the first service (such as the URLLC service).

After the terminal device determines to prioritize transmitting the first SR, the method 200 may optionally further include: the terminal device instructing the physical layer to transmit the first SR, or the terminal device prioritizing transmitting the first SR to the physical layer at the MAC layer. When the terminal device instructs the physical layer to transmit the first SR, further, the terminal device may instruct, at the MAC layer, the physical layer to prioritize transmitting the first SR.

After receiving the first SR at the physical layer, the terminal device may prioritize transmitting the first SR to the network device.

Optionally, the method 200 may further include: when the terminal device determines to prioritize transmitting the first SR, the terminal device may indicate the first MAC PDU to the physical layer at the MAC layer. Alternatively, before determining whether to prioritize transmitting the first SR, the terminal device may indicate the first MAC PDU to the physical layer at the MAC layer. Alternatively, regardless of the situation or regardless of the condition, the terminal device may indicate the first MAC PDU to the physical layer at the MAC layer. Alternatively, when the terminal device determines to prioritize transmitting the first SR, the terminal device has already indicated the first MAC PDU to the physical layer at the MAC layer.

The terminal device indicating the first MAC PDU to the physical layer may be understood as follows. The terminal device transmits the first MAC PDU to the physical layer, or the terminal device stores the first MAC PDU in a HARQ buffer.

Correspondingly, the first MAC PDU may be packetized by the MAC layer before it determines to prioritize transmitting the first SR, or the first MAC PDU may be packetized by the MAC layer when or after it determines to prioritize transmitting the first SR.

Alternatively, when the terminal device determines to prioritize transmitting the first SR, or before determining whether to prioritize transmitting the first SR, or regardless of the situation or regardless of the condition, the terminal device may discard the first MAC PDU.

In order to understand the present disclosure more clearly, an implementation process of embodiments of the present disclosure will be described in detail below.

In step 1, the network device configures SR configuration information and logical channel configuration information to the terminal device. The network device may configure a configuration ID of the first SR or an ID of the first PUCCH resource in the logical channel configuration information, and the terminal device can obtain the first PUCCH resource from the SR configuration information through the configuration ID of the first SR or the ID of the first PUCCH resource.

In step 2, the network device configures a semi-static scheduling configured grant or a dynamic grant. If the semi-static scheduling configured grant is configured, the network device may indicate the configured grant to the terminal device through RRC signaling. If the network device configures the dynamic grant, the network device may indicate the dynamic grant to the terminal device through the DCI.

In step 3, the terminal device receives the configured grant or dynamic grant as configured, determines that there is an uplink resource for transmitting the uplink data, and determines that there is an available PUSCH resource.

In step 4, when the configured first logical channel meets a condition for triggering the first SR, the terminal device triggers the first SR at the MAC layer.

Specifically, when the data of the first logical channel needs to be sent, the BSR can be triggered. In a case where the terminal device does not have any available uplink resource to send the BSR, the terminal device may send the first SR to request the network device to configure the uplink resource for sending the data of the first logical channel, where the first SR may be transmitted on the first PUCCH resource.

Assuming that the first PUCCH resource and the first PUSCH resource overlap at present, the terminal device needs to determine which channel or information transmission is prioritized. When one of the following conditions is met, the terminal device prioritizes transmitting the first SR.

For example, if the bit of the first indication information is "1" (the bit "1" indicates that the terminal device prioritizes transmitting the first SR), the terminal device prioritizes transmitting the first SR.

As another example, the network device configures the first type of MAC CE for the terminal device, and the first MAC CE is the first type of MAC CE. That is, the first type of MAC CE is triggered, and the terminal device prioritizes transmitting the first SR.

As still another example, assuming that priority 1 is higher than priority 2, the priority for triggering the first PUSCH resource is 2, and the priority of the first PUCCH resource is 1, then the terminal device prioritizes transmitting the first SR.

As still another example, assuming that the first preset priority threshold is 1, priority 1 is higher than priority 2, and the priority of the first PUSCH resource is 2. Since the priority of the first PUSCH resource is lower than the first preset priority threshold, the terminal device prioritizes transmitting the first SR.

As still another example, assuming that the resource identifiers with resource identifiers 3 and 4 are first resource identifiers, and the identifier of the first PUSCH resource is 1. Since the identifier of the first PUSCH resource is not the first resource identifier, the terminal device prioritizes transmitting the first SR.

As still another example, the duration of the first PUSCH resource is 2 slots, and the duration of the first PUCCH resource is 2 symbols. Since the duration of the first PUSCH resource is greater than the duration of the first PUCCH resource, the terminal device prioritizes transmitting the first SR.

As still another example, the period of the first PUSCH resource is 10 ms, and the period of the first PUCCH resource is 2 symbols. Since the period of the first PUSCH resource is greater than the period of the first PUCCH resource, the terminal device prioritizes transmitting the first SR.

As still another example, assuming that priority 1 is higher than priority 2, the priority of the logical channel corresponding to the first MAC CE is 2, and the priority of the first logical channel is 1, then the terminal device prioritizes transmitting the first SR.

As still another example, assuming that the second preset priority threshold is 2, and the priority of the logical channel corresponding to the first MAC CE is 2. Since the priority of the logical channel corresponding to the first MAC CE is equal to the second preset priority threshold, the terminal device prioritizes transmitting the first SR.

As still another example, assuming that priority 1 is higher than priority 2, the priority of a logical channel with the highest priority among the logical channels corresponding to the first MAC CE is 2, and the priority of the first logical channel is 1, then the terminal device prioritizes transmitting the first SR.

As still another example, assuming that priority 1 is higher than priority 2, the reason for triggering RA is that the uplink data arrives and there is no uplink resource, the priority of the logical channel that triggers RA is 2, and the priority of the logical channel that triggers the first SR is 1, then the terminal device prioritizes transmitting the first SR.

As still another example, assuming that priority 1 is higher than priority 2, the priority threshold is 1, the reason for triggering RA is that the uplink data arrives and there is no uplink resource, and the priority of the logical channel that triggers RA is 2, then the terminal device prioritizes transmitting the first SR.

As still another example, the reason for triggering the RA is positioning, and the terminal device prioritizes transmitting the first SR.

As still another example, the first SR is triggered after the first MAC PDU is packetized, and the priority of the first logical channel is the same as the priority of the logical channel corresponding to the first MAC PDU, or the priority of the first logical channel is higher than the priority of the logical channel corresponding to the first MAC PDU, then the terminal device prioritizes transmitting the first SR.

In step 5, after the terminal device determines to prioritize transmitting the first SR, the terminal device instructs the physical layer at the MAC layer to prioritize transmitting the first SR, or the terminal device instructs the physical layer to transmit the first SR.

Optionally, in embodiments of the present disclosure, the method 200 may further include: when the terminal device determines to prioritize transmitting the first SR, the terminal device determines whether to use the first LCP order.

In this case, the terminal device may receive second information sent by the network device, and the second information may be used for indicating whether the terminal device uses the first LCP order. The second information may be carried in the RRC signaling, or the second information may be carried in the DCI, or the second information may be carried in the MAC CE.

As an example, the second information may indicate whether the terminal device uses the first LCP order by at least one bit.

Exemplarily, the second information may include one bit. The bit "1" indicates that the terminal device uses the first LCP order, and the bit "0" indicates that the terminal device does not use the first LCP order.

As another example, the second information may include multiple bits. If the multiple bits are the same, it indicates that the terminal device uses the first LCP order. If at least two of the multiple bits are different, it indicates that the terminal device does not use the first LCP order.

As still another example, the second information may indicate that when the terminal device meets the first condition, the terminal device may use the first LCP order. The first condition may be stipulated by the protocol, or may be pre-configured by the network device, or may also be carried in the second information.

The first condition may include but is not limited to at least one of the following conditions:
the terminal device is a terminal device that configures or activates the first service or the first logical channel;
the terminal device is a terminal device that supports the first logical channel prioritization order;
the terminal device is a terminal device that configures or supports to prioritize transmitting the first SR;
the terminal device is a terminal device that determines whether to prioritize transmitting the first SR;
the terminal device is a terminal device that supports release16 (R16) and future releases;
the terminal device is a terminal device that has determined to prioritize transmitting the first SR; and
the terminal device is a terminal device that prioritizes transmitting the first SR when the PUCCH resource overlaps with other resources.

The terminal device being a terminal device that determines whether to prioritize transmitting the first SR may be understood as follows. The terminal device determines whether to prioritize transmitting the first SR, but a determination result may be that the first SR is prioritized for transmission, and the first SR is not prioritized for transmission.

The terminal device being a terminal device that has determined to prioritize transmitting the first SR may be understood as follows. The terminal device determines whether to prioritize transmitting the first SR, and the determination result is that the first SR is prioritized for transmission. However, the terminal device may prioritize transmitting the first SR, or may not prioritize transmitting the first SR in the end.

It should be noted that the second condition may be applied to a scenario where the first PUCCH resource overlaps with other resources, and may also be applied to a scenario where the first PUCCH resource does not overlap with other resources, which is not specifically limited in embodiments of the present disclosure.

Alternatively, the terminal device may determine whether to use the first LCP order according to predefined information or the UE implementation.

As an example, the predefined information may be that when the terminal device prioritizes transmitting the first SR, the terminal device may use the first LCP order.

As another example, the predefined information may be that the terminal device may use the first LCP order during a specific event.

As still another example, the predefined information may be that when the terminal device meets the first condition, the terminal device may use the first LCP order.

In a case where the terminal device determines to use the first LCP order, the terminal device can perform priority sorting and packetizing according to the first LCP order when it receives a new transmission grant.

The terminal device uses the first LCP order, so that the prioritized transmission of data or BSR of the first logical channel can be guaranteed. Further, a transmission priority of the first SR and the priority of the first SR in the LCP order may be aligned. That is, when the priority of the first SR is high, the priority of the first logical channel corresponding to the first SR in the LCP order is also high.

In embodiments of the present disclosure, when the resource used for transmitting the SR and the resource used for transmitting the MAC PDU overlap, the terminal device can determine whether to prioritize transmitting the SR. In this way, the terminal device may prioritize transmitting the SR in certain scenarios. As such, the network device can be ensured, to a certain extent, to know in time that there is an IIoT service that needs to be transmitted at present, so that the network device may schedule the IIoT service in time, thereby ensuring QoS of the IIoT service, and improving a possibility of normal transmission of the IIoT service.

FIG. 4 is a schematic diagram of a communication method 300 according to an embodiment of the present disclosure. The method described in FIG. 4 may be executed by the terminal device, and the terminal device may be, for example, the terminal device 120 shown in FIG. 1. As shown in FIG. 4, the method 300 may include at least part of the following content.

In 310, the terminal device determines whether to use the first LCP order.

In the first LCP order, a priority of data of a logical channel carrying a first service is higher than a priority of a configured grant MAC CE.

In the first LCP order, the priority of the data of the logical channel carrying the first service is higher than a priority of data carried by a C-RNTI MAC CE or an UL-CCCH.

Optionally, in embodiments of the present disclosure, the first LCP order further includes a priority of a BSR MAC CE of the first service or a BSR MAC CE of the first logical channel. In the first LCP order, a priority of the BSR MAC CE of the first service or the BSR MAC CE of the first logical channel may be higher than the priority of the data of the logical channel carrying the first service.

Optionally, in embodiments of the present disclosure, the method 300 further includes: the terminal device receiving second information sent by the network device, wherein the second information is used for indicating whether the terminal device uses the first LCP order. The second information may be carried in the RRC signaling, or the second information may be carried in the DCI, or the second information may be carried in the MAC CE.

Optionally, in embodiments of the present disclosure, the determining, by the terminal device, whether to use the first LCP order may include: determining, by the terminal device, whether to use the first LCP order according to predefined information or a UE implementation.

Optionally, in embodiments of the present disclosure, the determining, by the terminal device, whether to use the first LCP order may include: determining, by the terminal device, to use the first LCP order when a first condition is met by the terminal device. The first condition is at least one of the following conditions:
the terminal device is a terminal device that configures or activates the first service or the first logical channel;
the terminal device is a terminal device that supports the first LCP order;
the terminal device is a terminal device that configures or supports to prioritize transmitting the first SR;
the terminal device is a terminal device that determines whether to prioritize transmitting the first SR;
the terminal device is a terminal device that supports release16 (R16) and future releases;
the terminal device is a terminal device that has determined to prioritize transmitting the first SR;
when the resource for transmitting the first SR overlaps with other resources, the terminal device is a terminal device that prioritizes transmitting the first SR.

Optionally, in embodiments of the present disclosure, the first SR corresponds to the first logical channel, and/or, the first SR is triggered by the first service.

Optionally, in embodiments of the present disclosure, the first service includes at least one of the following: an URLLC service, an IIoT service, and a vertical industry service.

Embodiments of the application propose a new LCP order based on the existing LCP order, which ensures the priority transmission of the first logical channel and the first service (such as the URLLC service), thereby ensuring QoS of the first service.

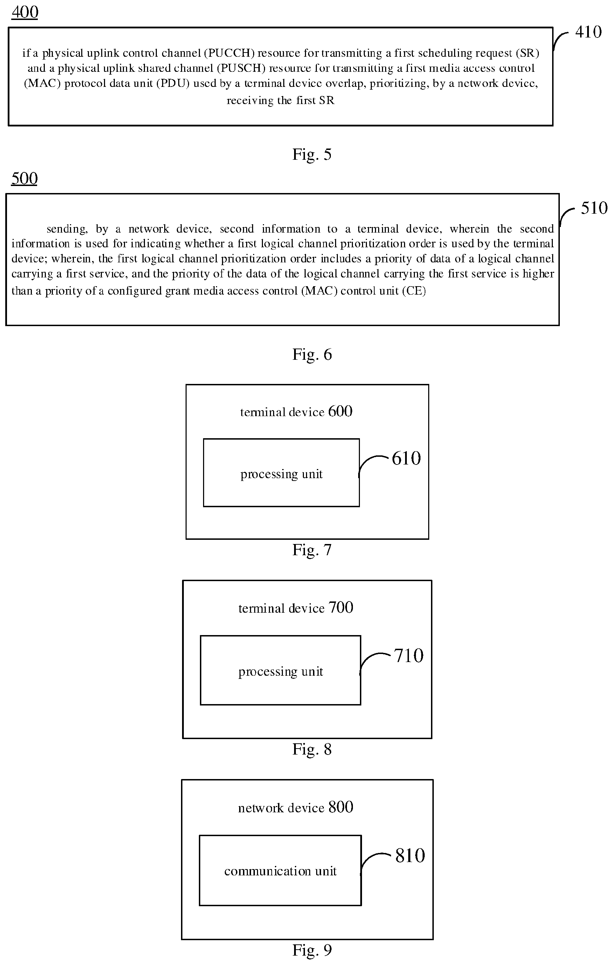

FIG. 5 is a schematic diagram of a communication method 400 according to an embodiment of the present disclosure. The method described in FIG. 5 may be executed by a network device, and the network device may be, for example, the network device 110 shown in FIG. 1. As shown in FIG. 5, the method 400 may include at least part of the following content.

In 410, if a PUCCH resource for transmitting a first SR and a PUSCH resource for transmitting a first MAC PDU used by a terminal device overlap, the network device prioritizes receiving the first SR.

Optionally, in embodiments of the present disclosure, the method 400 may further include: the network device sending a first message to the terminal device, wherein the first message includes first information and the first information is used by the terminal device to determine whether to prioritize transmitting the first SR.

Optionally, in embodiments of the present disclosure, the first information includes at least one of the following information:
first indication information that the network device indicates whether to prioritize transmitting the first SR;
second indication information that the terminal device indicates to the network device whether it has an ability to use a first logical channel prioritization order;
a type of a first MAC CE included in the first MAC PDU;
a resource attribute of the PUCCH resource;
a resource attribute of the PUSCH resource;
an attribute of a first logical channel corresponding to the first SR;
an attribute of a logical channel corresponding to the first MAC CE;
a reason for triggering the first MAC CE;
whether the PUSCH resource is capable of carrying data of the first logical channel;
a time sequence for triggering the first SR and the first MAC PDU being packetized; and
a reason for triggering a random access procedure.

Optionally, in an embodiment of the application, the resource attribute of the PUCCH resource includes at least one of the following: a priority of the PUCCH resource, an identifier of the PUCCH resource, a period of the PUCCH resource, a duration of the PUCCH resource, and a modulation and coding scheme (MCS) level corresponding to the PUCCH resource.

Optionally, in embodiments of the present disclosure, the resource attribute of the PUSCH resource includes at least one of the following: a priority of the PUSCH resource, an identifier of the PUSCH resource, a period of the PUSCH resource, a duration of the PUSCH resource, a MCS level corresponding to the PUSCH resource, an attribute of a logical channel that the PUSCH resource is capable of carrying, and service information that the PUSCH resource is capable of carrying.

Optionally, in embodiments of the present disclosure, the attribute of the logical channel includes at least one of the following: a priority of the logical channel, an identifier of the logical channel, and service information of a service carried by the logical channel.

Optionally, in embodiments of the present disclosure, the service information includes at least one of the following: a service priority, a service identifier, and a service type.

Optionally, in embodiments of the present disclosure, information of the first logical channel may be transmitted on the PUCCH resource, or the first logical channel corresponds to the data that triggers the first SR.

Alternatively, the logical channel corresponding to the first MAC CE corresponds to information carried in the first MAC CE, or the PUSCH resource is capable of carrying the logical channel corresponding to the first MAC CE, or the logical channel corresponding to the first MAC CE triggers the first MAC CE.

Optionally, in embodiments of the present disclosure, the first information may be carried in the RRC signaling, or the first information may be carried in the DCI, or the first information may be carried in the MAC CE.

Optionally, in embodiments of the present disclosure, the method 400 may further include: the network device sending second information to the terminal device, wherein the second information is used for indicating whether the terminal device uses the first LCP order.

Optionally, in embodiments of the present disclosure, the second information may be carried in the RRC signaling, the DCI, or the MAC CE.

Optionally, in embodiments of the present disclosure, in the first LCP order, a priority of data of a logical channel carrying a first service is higher than a priority of a configured grant confirmation MAC CE; and/or in the first LCP order, a priority of a BSR MAC CE of the first service or a BSR MAC CE of the first logical channel is higher than the priority of the configured grant confirmation MAC CE.

Optionally, in embodiments of the present disclosure, in the first LCP order, the priority of the data of the logical channel carrying the first service is higher than a priority of data carried by a C-RNTI MAC CE or an uplink common control channel; and/or in the first LCP order, the priority of the BSR MAC CE of the first service or the BSR MAC CE of the first logical channel is higher than the priority of the data carried by the C-RNTI MAC CE or the uplink common control channel.

Optionally, in embodiments of the present disclosure, the method 400 may further include: the network device sending third information to the terminal device, wherein the third information is used for configuring or indicating a first type of MAC CE.

Optionally, in embodiments of the present disclosure, the first type of MAC CE is any one of the following:
the C-RNTI MAC CE;
a first type of MAC SDU;
a configured grant confirmation MAC CE;
a MAC CE for BSR with exception of BSR included for padding;
a single PHR MAC CE;
multiple entry PHR MAC CE;
a BSR MAC CE triggered by a service other than the first service; and
a BSR MAC CE triggered by a logical channel other than the first logical channel.

Optionally, in embodiments of the present disclosure, the first SR corresponds to the first logical channel, and/or the first SR is triggered by the first service.

Optionally, in embodiments of the present disclosure, the first service includes at least one of the following: the URLLC service, the IIoT service, and the vertical industry service.

FIG. 6 is a schematic diagram of a communication method 500 according to an embodiment of the present disclosure. The method described in FIG. 6 may be executed by a network device, and the network device may be, for example, the network device 110 shown in FIG. 1. As shown in FIG. 6, the method 500 may include at least part of the following content.

In 510, the network device sends second information to the terminal device, and the second information is used for indicating whether the terminal device uses the first LCP order.

In the first LCP order, the priority of the data of the logical channel carrying the first service is higher than the priority of a configured grant MAC CE.

Optionally, in embodiments of the present disclosure, in the first LCP order, the priority of the data of the logical channel carrying the first service is higher than the priority of the data carried by the C-RNTI MAC CE or the uplink common control channel.

Optionally, in embodiments of the present disclosure, the first LCP order further includes the priority of the BSR MAC CE of the first service or the BSR MAC CE of the first logical channel.

Optionally, in embodiments of the present disclosure, in the first LCP order, the priority of the BSR MAC CE of the first service or the BSR MAC CE of the first logical channel is higher than the priority of the data of the logical channel carrying the first service.

Optionally, in embodiments of the present disclosure, the second information is carried in the RRC signaling, or the second information is carried in the DCI, or the second information is carried in the MAC CE.

Optionally, in embodiments of the present disclosure, the first service includes at least one of the following: the URLLC service, the IIoT service, and the vertical industry service.

It should be understood that although the methods 200-500 are described above respectively, this does not mean that the methods 200-500 are independent, and descriptions of two methods may refer to each other. For example, the related description in method 200 may be applicable to methods 300-500. For the sake of brevity of content, the method 300-500 will not be described in detail in embodiments of the present disclosure.

The preferred embodiments of the present disclosure are described in detail above with reference to the accompanying drawing. However, the present disclosure is not limited to the specific details in these embodiments, and various simple modifications may be made to the technical solution of the present disclosure within the scope of the technical concept of the present disclosure. These simple variations are within the scope of the present disclosure.

For example, the specific technical features described in the specific embodiments may be combined in any suitable manner without contradiction. In order to avoid unnecessary repetition, various possible combinations will not be described in the present disclosure.

As another example, any combination among the various embodiments of the present disclosure can be made as long as it does not contradict the idea of the present disclosure, and it should also be regarded as the content disclosed in the present disclosure.

It should be understood that, in various method embodiments of the present disclosure, the sizes of the sequence numbers of each processes do not mean the order of execution, and the order of execution of each process should be determined by its function and an internal logic, which should not make any limitation to the implementation process of embodiments of the present disclosure.

The communication method according to embodiments of the present disclosure is described in detail above. A communication device according to embodiments of the present disclosure will be described below in conjunction with FIG. 7 to FIG. 11. The technical features described in the method embodiments are applicable to the following device embodiments.

FIG. 7 shows a schematic block diagram of a terminal device 600 according to an embodiment of the present disclosure. As shown in FIG. 7, the terminal device 600 includes:
a processing unit 610, configured to determine whether to prioritize transmitting a first SR, if a PUCCH resource for transmitting the first SR and a PUSCH resource for transmitting a first MAC PDU used by the terminal device 600 overlap.

Optionally, in embodiments of the present disclosure, the processing unit 610 is specifically configured to: determine whether to prioritize transmitting the first SR according to first information.

The first information includes at least one of the following information:
first indication information that a network device indicates whether to prioritize transmitting the first SR;
second indication information that the terminal device indicates to the network device whether it has an ability to use a first LCP order;
a type of a first MAC CE included in the first MAC PDU;
a resource attribute of the PUCCH resource;
a resource attribute of the PUSCH resource;
an attribute of a first logical channel corresponding to the first SR;
an attribute of a logical channel corresponding to the first MAC CE;
a reason for triggering the first MAC CE;
whether the PUSCH resource is capable of carrying data of the first logical channel;
a time sequence for triggering the first SR and the first MAC PDU being packetized; and
a reason for triggering a random access procedure.

Optionally, in embodiments of the present disclosure, the resource attribute of the PUCCH resource includes at least one of the following: a priority of the PUCCH resource, an identifier of the PUCCH resource, a period of the PUCCH resource, a duration of the PUCCH resource, and a MCS level corresponding to the PUCCH resource.

Optionally, in embodiments of the present disclosure, the resource attribute of the PUSCH resource includes at least one of the following: a priority of the PUSCH resource, an identifier of the PUSCH resource, a period of the PUSCH resource, a duration of the PUSCH resource, a MCS level corresponding to the PUSCH resource, an attribute of a logical channel that the PUSCH resource is capable of carrying, and service information that the PUSCH resource is capable of carrying.

Optionally, in embodiments of the present disclosure, the attribute of the logical channel includes at least one of the following: a priority of the logical channel, an identifier of the logical channel, and service information of a service carried by the logical channel.

Optionally, in embodiments of the present disclosure, the service information includes at least one of the following: a service priority, a service identifier, and a service type.

Optionally, in embodiments of the present disclosure, information of the first logical channel is transmitted on the PUCCH resource, or the first logical channel corresponds to the data that triggers the first SR.

Alternatively, the logical channel corresponding to the first MAC CE corresponds to information carried in the first MAC CE, or the PUSCH resource is capable of carrying the logical channel corresponding to the first MAC CE, or the logical channel corresponding to the first MAC CE triggers the first MAC CE.

Optionally, in embodiments of the present disclosure, the processing unit 610 is specifically configured to: determine to prioritize transmitting the first SR when the first information meets at least one of the following conditions:
the first indication information indicates to prioritize transmitting the first SR by the terminal device;
when the second indication information is carried in a second MAC CE, a type of the second MAC CE is a first MAC CE type;
a type of the first MAC CE is the first MAC CE type;
the priority of the PUSCH resource is lower than or equal to a first preset priority threshold;
the priority of the PUCCH resource is higher than or equal to the first preset priority threshold;
the priority of the PUSCH resource is lower than or equal to the priority of the PUCCH resource;
the identifier of the PUSCH resource is not a first resource identifier;
the identifier of the PUSCH resource is a second resource identifier;
the identifier of the PUCCH resource is the first resource identifier;
the period of the PUSCH resource is greater than or equal to a preset PUSCH period threshold;
the period of the PUCCH resource is less than or equal to a preset PUCCH period threshold;
the period of the PUSCH resource is greater than or equal to the period of the PUCCH resource;
a transmission duration of the PUSCH resource is greater than or equal to a preset PUSCH transmission duration;
a transmission duration of the PUCCH resource is less than or equal to a preset PUCCH transmission duration;
the transmission duration of the PUSCH resource is greater than or equal to the transmission duration of the PUCCH resource;
a MCS level used for transmitting the PUSCH resource is greater than or equal to a preset MCS level;
a MCS level used for transmitting the PUCCH resource is less than or equal to the preset MCS level;
the MCS level used for transmitting the PUSCH resource is greater than or equal to the MCS level used for transmitting the PUCCH resource;
the attribute of the logical channel that the PUSCH resource is capable of carrying does not meet a set attribute of the logical channel;
the service information that the PUSCH resource is capable of carrying does not meet set service information;
a priority of the logical channel corresponding to the first MAC CE is lower than or equal to a second preset priority threshold;
a priority of the first logical channel is higher than or equal to the second preset priority threshold;
the priority of the logical channel corresponding to the first MAC CE is lower than or equal to the priority of the first logical channel;
an identifier of the logical channel corresponding to the first MAC CE is not a first logical channel identifier;
the identifier of the logical channel corresponding to the first MAC CE is a second logical channel identifier;
an identifier of the first logical channel is the first logical channel identifier;
a service type of a service carried by the logical channel corresponding to the first MAC CE is not a first service type;
the service type of the service carried by the logical channel corresponding to the first MAC CE is a second service type;
a service type of a service carried by the first logical channel is the first service type;
a priority of the service carried by the logical channel corresponding to the first MAC CE is lower than or equal to a priority of the service carried by the first logical channel;
the priority of the service carried by the logical channel corresponding to the first MAC CE is lower than or equal to a preset service priority;
the priority of the service carried by the first logical channel is higher than or equal to the preset service priority;
the reason for triggering the first MAC CE is a specific reason;
the priority of the first logical channel is higher than or equal to the priority of the logical channel corresponding to the first MAC CE, and the PUSCH resource is not capable of carrying the data of the first logical channel;
the priority of the first logical channel is higher than or equal to the priority of the logical channel corresponding to the first MAC CE, and the first SR is triggered after the first MAC PDU is packetized;
the first SR is triggered before the first MAC PDU is packetized, and the PUSCH resource is not capable of carrying the data of the first logical channel;
the reason for triggering the random access procedure is positioning;
the reason for triggering the random access procedure is that in a RRC connected state, uplink data arrives and there is no available uplink resource, and a logical channel that triggers the random access procedure is not a specific logical channel;
the reason for triggering the random access procedure is that in the RRC connected state, the uplink data arrives and there is no available uplink resource, and the logical channel that triggers the random access procedure is a second logical channel;
the reason for triggering the random access procedure is that in the RRC connected state, the uplink data arrives and there is no available uplink resource, and the logical channel that triggers the random access procedure is not a logical channel where a first service is located;
the reason for triggering the random access procedure is that in the RRC connected state, the uplink data arrives and there is no available uplink resource, and the logical channel that triggers the random access procedure is a logical channel where a second service is located;
the reason for triggering the random access procedure is that in the RRC connected state, the uplink data arrives and there is no available uplink resource, and the priority of the logical channel that triggers the random access procedure is lower than a third preset priority threshold;
the reason for triggering the random access procedure is that in the RRC connected state, the uplink data arrives and there is no available uplink resource, and the priority of the logical channel that triggers the random access procedure is lower than the priority of the first logical channel;
the reason for triggering the random access procedure is that other system information is requested by the terminal device;
the reason for triggering the random access procedure is that a time alignment (TA) is established by the terminal device when a secondary cell is added; and
the reason for triggering the random access procedure is beam failure recovery.

Optionally, in embodiments of the present disclosure, the first type of MAC CE is any one of the following:
the C-RNTI MAC CE;
the first type of MAC SDU;
the configured grant confirmation MAC CE;
a MAC CE for BSR with exception of BSR included for padding;
a single entry PHR MAC CE;
multiple entry PHR MAC CE;
a BSR MAC CE triggered by a service other than the first service; and
a BSR MAC CE triggered by a logical channel other than the first logical channel.

Optionally, in embodiments of the present disclosure, the first type of MAC CE is predefined, or the first type of MAC CE is determined by the terminal device, or the first type of MAC CE is configured or indicated by the network device.

Optionally, in embodiments of the present disclosure, the specific reason includes at least one of the following reasons:
the reason for triggering the first MAC CE is random access;
the first MAC CE is used for activating or deactivating configured grant;
the first MAC CE is triggered by the BSR;
the first MAC CE is triggered by a BSR of URLLC; and
the first MAC CE is not triggered by the BSR of the URLLC.

Optionally, in embodiments of the present disclosure, the terminal device 600 further includes: a communication unit 620, configured to receive a first message sent by the network device, wherein the first message includes the first information.

Optionally, in embodiments of the present disclosure, the first message is carried in the RRC signaling, or the first message is carried in the DCI, or the first message is carried in the MAC CE.

Optionally, in embodiments of the present disclosure, the first condition is predefined.

Optionally, in embodiments of the present disclosure, the processing unit 610 is further configured to determine whether to use the first LCP order when it is determined to prioritize transmitting the first SR.

Optionally, in embodiments of the present disclosure, the terminal device 600 further includes: a communication unit 620, configured to receive second information sent by a network device, wherein the second information is used for indicating whether the terminal device uses the first LCP order.

Optionally, in embodiments of the present disclosure, the second information is carried in the RRC signaling, or the second information is carried in the DCI, or the second information is carried in the MAC CE.

Optionally, in embodiments of the present disclosure, the processing unit 610 is specifically configured to determine whether to use the first LCP order according to predefined information.

Optionally, in embodiments of the present disclosure, the processing unit 610 is specifically configured to: determine to use the first LCP order when a first condition is met by the terminal device.

The first condition is at least one of the following conditions:
the terminal device is a terminal device that configures or activates the first service or the first logical channel;
the terminal device is a terminal device that supports the first logical channel prioritization order;
the terminal device is a terminal device that configures or supports to prioritize transmitting the first SR;
the terminal device is a terminal device that determines whether to prioritize transmitting the first SR;
the terminal device is a terminal device that supports release16 (R16) and future releases;
the terminal device is a terminal device that has determined to prioritize transmitting the first SR; and
the terminal device is a terminal device that prioritizes transmitting the first SR when the PUCCH resource overlaps with other resources.

Optionally, in embodiments of the present disclosure, in the first LCP order, the priority of the data of the logical channel carrying the first service is higher than the priority of the configured grant confirmation MAC CE; and/or
in the first LCP order, the priority of the BSR MAC CE of the first service or the BSR MAC CE of the first logical channel is higher than the priority of the configured grant confirmation MAC CE.

Optionally, in embodiments of the present disclosure, in the first LCP order, the priority of the data of the logical channel carrying the first service is higher than the priority of the data carried by the C-RNTI MAC CE or the uplink common control channel; and/or
in the first LCP order, the priority of the BSR MAC CE of the first service or the BSR MAC CE of the first logical channel is higher than the priority of the data carried by the C-RNTI MAC CE or the uplink common control channel.

Optionally, in embodiments of the present disclosure, the first SR corresponds to the first logical channel, and/or the first SR is triggered by the first service.

Optionally, in embodiments of the present disclosure, the first service includes at least one of the following: the URLLC service, the IIoT service, and the vertical industry service.

Optionally, in embodiments of the present disclosure, the processing unit 610 is further configured to: instruct a physical layer to transmit the first SR if it is determined to prioritize transmitting the first SR.

Optionally, in embodiments of the present disclosure, the processing unit 610 is specifically configured to: instruct the physical layer at a MAC layer to prioritize transmitting the first SR.

Optionally, in embodiments of the present disclosure, the processing unit 610 is further configured to:
determine at the physical layer to prioritize transmitting the first SR when the first SR is received in the physical layer.

Optionally, in embodiments of the present disclosure, when the processing unit 610 determines to prioritize transmitting the first SR, the processing unit 610 is further configured to indicate the first MAC PDU to the physical layer at the MAC layer.

It should be understood that the terminal device 600 may correspond to the terminal device in the method 200, and can implement the corresponding operations of the terminal device in the method 200. For the sake of brevity, it will not be repeated here.

FIG. 8 shows a schematic block diagram of a terminal device 700 according to an embodiment of the present disclosure. As shown in FIG. 8, the terminal device 700 includes:
a processing unit 710, configured to determine whether to use the first LCP order, wherein in the first LCP order, the priority of the data of the logical channel carrying the first service is higher than the priority of the configured grant MAC CE.

Optionally, in embodiments of the present disclosure, in the first LCP order, the priority of the data of the logical channel carrying the first service is higher than the priority of the data carried by the C-RNTI MAC CE or the uplink common control channel.

Optionally, in embodiments of the present disclosure, the first LCP order further includes the priority of the BSR MAC CE of the first service or the BSR MAC CE of the first logical channel.

Optionally, in embodiments of the present disclosure, in the first LCP order, the priority of the BSR MAC CE of the first service or the BSR MAC CE of the first logical channel is higher than the priority of the data of the logical channel carrying the first service.

Optionally, in embodiments of the present disclosure, the terminal device 700 further includes:
a communication unit 720, configured to receive second information sent by the network device, wherein the second information is used for indicating whether the terminal device uses the first LCP order.

Optionally, in embodiments of the present disclosure, the second information is carried in the RRC signaling, or the second information is carried in the DCI, or the second information is carried in the MAC CE.

Optionally, in embodiments of the present disclosure, the processing unit 710 is specifically configured to determine whether to use the first LCP order according to predefined information.

Optionally, in embodiments of the present disclosure, the processing unit 710 is specifically configured to determine to use the first LCP order when the terminal device meets a second condition.

The second condition is at least one of the following conditions:
the terminal device is a terminal device that configures or activates the first service or the first logical channel;
the terminal device is a terminal device that supports the first logical channel prioritization order;
when a PUCCH resource for transmitting a first SR overlaps with other resources, the terminal device is a terminal device that configures or supports to prioritize transmitting the first SR;
when the PUCCH resource overlaps with other resources, the terminal device is a terminal device that determines whether to prioritize transmitting the first SR;
the terminal device is a terminal device that supports release16 (R16) and future releases;
when the PUCCH resource overlaps with other resources, the terminal device is a terminal device that has determined to prioritize transmitting the first SR; and
when the PUCCH resource overlaps with other resources, the terminal device is a terminal device that prioritizes transmitting the first SR.

Optionally, in embodiments of the present disclosure, the first SR corresponds to the first logical channel, and/or the first SR is triggered by the first service.

Optionally, in embodiments of the present disclosure, the first service includes at least one of the following: the URLLC service, the IIoT service, and the vertical industry service.

It should be understood that the terminal device 700 may correspond to the terminal device in the method 400, and can implement the corresponding operations of the terminal device in the method 400. For the sake of brevity, details are not described herein again.

FIG. 9 shows a schematic block diagram of a network device 800 according to an embodiment of the present disclosure. As shown in FIG. 9, the network device 800 includes:
a communication unit 810, configured to prioritize receiving the first SR, if the PUCCH resource for transmitting the first SR and the PUSCH resource for transmitting the first MAC PDU used by the terminal overlap.

Optionally, in embodiments of the present disclosure, the communication unit 810 is further configured to send a first message to the terminal device, wherein the first message includes first information, and the first information is used by the terminal device to determine whether to prioritize transmitting the first SR.

Optionally, in embodiments of the present disclosure, the first information includes at least one of the following information:
first indication information that the network device indicates whether to prioritize transmitting the first SR;
second indication information that the terminal device indicates to the network device whether it has an ability to use a first LCP order;
a type of a first MAC CE included in the first MAC PDU;
a resource attribute of the PUCCH resource;
a resource attribute of the PUSCH resource;
an attribute of a first logical channel corresponding to the first SR;
an attribute of a logical channel corresponding to the first MAC CE;
a reason for triggering the first MAC CE;
whether the PUSCH resource is capable of carrying data of the first logical channel;
a time sequence for triggering the first SR and the first MAC PDU being packetized; and
a reason for triggering a random access procedure.

Optionally, in embodiments of the present disclosure, the resource attribute of the PUCCH resource includes at least one of the following: a priority of the PUCCH resource, an identifier of the PUCCH resource, a period of the PUCCH resource, a duration of the PUCCH resource, and a MCS level corresponding to the PUCCH resource.

Optionally, in embodiments of the present disclosure, the resource attribute of the PUSCH resource includes at least one of the following: a priority of the PUSCH resource, an identifier of the PUSCH resource, a period of the PUSCH resource, a duration of the PUSCH resource, a MCS level corresponding to the PUSCH resource, an attribute of a logical channel that the PUSCH resource is capable of carrying, and service information that the PUSCH resource is capable of carrying.

Optionally, in embodiments of the present disclosure, the attribute of the logical channel includes at least one of the following: a priority of the logical channel, an identifier of the logical channel, and service information of a service carried by the logical channel.

Optionally, in embodiments of the present disclosure, the service information includes at least one of the following: a service priority, a service identifier, and a service type.

Optionally, in embodiments of the present disclosure, information of the first logical channel is transmitted on the PUCCH resource, or the first logical channel corresponds to the data that triggers the first SR; or
the logical channel corresponding to the first MAC CE corresponds to information carried in the first MAC CE, or the PUSCH resource is capable of carrying the logical channel corresponding to the first MAC CE, or the logical channel corresponding to the first MAC CE triggers the first MAC CE.

Optionally, in embodiments of the present disclosure, the first message is carried in the RRC signaling, or the first message is carried in the DCI, or the first message is carried in the MAC CE.

Optionally, in embodiments of the present disclosure, the communication unit 810 is further configured to send second information to the terminal device, wherein the second information is used for indicating whether the terminal device uses the first LCP order.

Optionally, in embodiments of the present disclosure, the second information is carried in RRC signaling, or the second information is carried in DCI, or the second information is carried in MAC CE.

Optionally, in embodiments of the present disclosure, in the first LCP order, the priority of the data of the logical channel carrying the first service is higher than the priority of the configured grant confirmation MAC CE; and/or
in the first LCP order, the priority of the BSR MAC CE of the first service or the BSR MAC CE of the first logical channel is higher than the priority of the configured grant confirmation MAC CE.

Optionally, in embodiments of the present disclosure, in the first LCP order, the priority of the data of the logical channel carrying the first service is higher than a priority of data carried by the C-RNTI MAC CE or the uplink common control channel; and/or
in the first LCP order, the priority of the BSR MAC CE of the first service or the BSR MAC CE of the first logical channel is higher than the priority of the data carried by the C-RNTI MAC CE or the uplink common control channel.

Optionally, in embodiments of the present disclosure, the communication unit 810 is further configured to send third information to the terminal device, wherein the third information is used for configuring or indicating the first type of MAC CE.

Optionally, in embodiments of the present disclosure, the first type of MAC CE is any one of the following:
the C-RNTI MAC CE;
a first type of MAC SDU;
a configured grant confirmation MAC CE;
a MAC CE for BSR with exception of BSR included for padding;
a single entry PHR MAC CE;
multiple entry PHR MAC CE;
a BSR MAC CE triggered by a service other than the first service; and
a BSR MAC CE triggered by a logical channel other than the first logical channel.

Optionally, in embodiments of the present disclosure, the first SR corresponds to the first logical channel, and/or the first SR is triggered by the first service.

Optionally, in embodiments of the present disclosure, the first service includes at least one of the following: the URLLC service, the IIoT service, and the vertical industry service.

It should be understood that the network device 800 may correspond to the network device in the method 400, and can implement the corresponding operations of the network device in the method 400. For the sake of brevity, details are not described herein again.

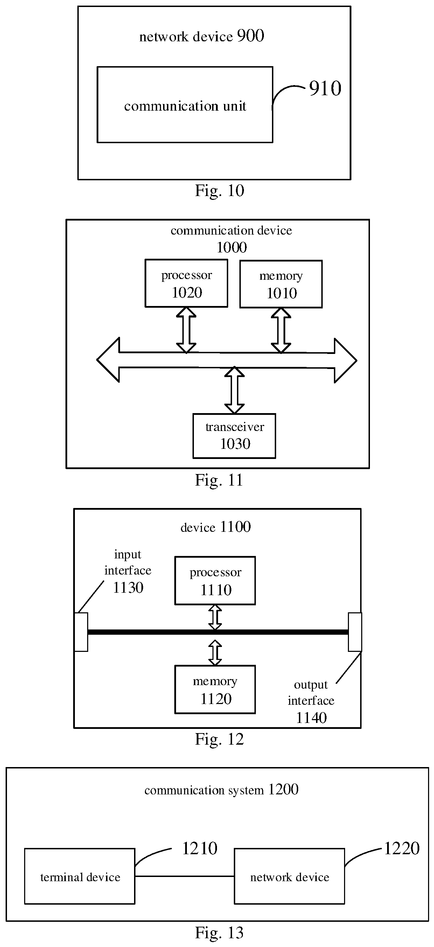

FIG. 10 shows a schematic block diagram of a network device 900 according to an embodiment of the present disclosure. As shown in FIG. 10, the network device 900 includes:
a communication unit 910, configured to send second information to a terminal device, wherein the second information is used for indicating whether the terminal device uses the first LCP order.

In the first LCP order, the priority of the data of the logical channel carrying the first service is higher than the priority of the configured grant MAC CE.

Optionally, in embodiments of the present disclosure, in the first LCP order, the priority of the data of the logical channel carrying the first service is higher than the priority of the data carried by the C-RNTI MAC CE or the uplink common control channel.

Optionally, in embodiments of the present disclosure, the first LCP order further includes the priority of the BSR MAC CE of the first service or the BSR MAC CE of the first logical channel.

Optionally, in embodiments of the present disclosure, in the first LCP order, the priority of the BSR MAC CE of the first service or the BSR MAC CE of the first logical channel is higher than the priority of the data of the logical channel carrying the first service.

Optionally, in embodiments of the present disclosure, the second information is carried in the RRC signaling, or the second information is carried in the DCI, or the second information is carried in the MAC CE.

Optionally, in embodiments of the present disclosure, the first service includes at least one of the following: the URLLC service, the IIoT service, and the vertical industry service.

It should be understood that the network device 900 may correspond to the network device in the method 500, and can implement the corresponding operations of the network device in the method 500. For the sake of brevity, details are not described herein again.

FIG. 11 is a schematic structural diagram of a communication device 1000 according to an embodiment of the present disclosure. The communication device 1000 shown in FIG. 11 includes a processor 1010, and the processor 1010 may call and run a computer program from a memory to perform the method in embodiments of the present disclosure.

According to embodiments, as shown in FIG. 11, the communication device 1000 may further include a memory 1020. The processor 1010 may call and run a computer program from the memory 1020 to perform the method in embodiments of the present disclosure.

The memory 1020 may be a separate device independent of the processor 1010, or may be integrated in the processor 1010.

According to embodiments, as shown in FIG. 11, the communication device 1000 may further include a transceiver 1030, and the processor 1010 may control the transceiver 1030 to communicate with other devices. Specifically, the transceiver may send information or data to other devices, or receive information or data sent by other devices.

The transceiver 1030 may include a transmitter and a receiver. The transceiver 1030 may further include one or more antennas.

According to embodiments, the communication device 1000 may specifically be the network device according to an embodiment of the present disclosure, and the communication device 1000 may implement the corresponding processes implemented by the network device in the method embodiments of the present disclosure. For brevity, details are not repeated here.

According to embodiments, the communication device 1000 may specifically be the terminal device in embodiments of the present disclosure, and the communication device 1000 may implement the corresponding processes implemented by the terminal device in the method embodiments of the present disclosure. For brevity, details are not repeated here.

FIG. 12 is a schematic structural diagram of a device according to an embodiment of the present disclosure. The device 1100 shown in FIG. 12 includes a processor 1110, and the processor 1110 can call and run a computer program from a memory to implement the method according to embodiments of the present disclosure.

According to embodiments, as shown in FIG. 12, the device 1100 may further include a memory 1120. The processor 1110 may call and run a computer program from the memory 1120 to implement the method according to embodiments of the present disclosure.

The memory 1120 may be a separate device independent of the processor 1110, or may be integrated in the processor 1110.

According to embodiments, the device 1100 may further include an input interface 1130. The processor 1110 may control the input interface 1130 to communicate with other devices or chips. Specifically, the processor 1110 can control the input interface to obtain information or data sent by other devices or chips.

According to embodiments, the device 1100 may further include an output interface 1140. The processor 1110 can control the output interface 1140 to communicate with other devices or chips. Specifically, the processor 1110 can control the output interface 1140 to output information or data to other devices or chips.

According to embodiments, the device can be applied to the terminal device in embodiments of the present disclosure, and the device can implement the corresponding processes implemented by the terminal device in various methods according to embodiments of the present disclosure. For brevity, details are not repeated herein again.

According to embodiments, the device can be applied to the network device in embodiments of the present disclosure, and the device can implement the corresponding processes implemented by the network device in various methods according to embodiments of the present disclosure. For brevity, details are not repeated herein again.

According to embodiments, the device 1100 can be a chip. It should be understood that the chip in embodiments of the present disclosure may also be referred to as a system-level chip, a system chip, a chip system, or a system-on-chip, etc.

It should be understood that the processor in embodiments of the present disclosure may be an integrated circuit chip with signal processing capability. In implementations, the steps of the foregoing method embodiments can be completed by hardware integrated logic circuits in the processor or instructions in the form of software. The above-mentioned processor may be a general-purpose processor, a Digital Signal Processor (DSP), an Application Specific Integrated Circuit (ASIC), a Field Programmable Gate Array (FPGA) or other programmable logic device, discrete gate or transistor logic device, discrete hardware component. The methods, steps, and logical block diagrams disclosed in embodiments of the present disclosure can be implemented or executed. The general-purpose processor may be a microprocessor, or the processor may also be any conventional processor or the like. The steps of the methods disclosed in embodiments of the present disclosure may be directly embodied as being executed and completed by a hardware decoding processor, or executed by a combination of hardware and software modules in the decoding processor. The software module can be located in a storage medium in the field, such as random access memory, flash memory, read-only memory, programmable read-only memory, or electrically erasable programmable memory, register. The storage medium is located in the memory, and the processor reads information from the memory to perform the steps of the above methods in combination with hardware.

It can be understood that the memory in embodiments of the present disclosure may be volatile memory or non-volatile memory, or may include both volatile and non-volatile memory. The non-volatile memory can be Read-Only Memory (ROM), Programmable ROM (PROM), Erasable PROM (EPROM), Electrically EPROM (EEPROM) or flash memory. The volatile memory may be a Random Access Memory (RAM), which is used as an external cache. By way of exemplary rather than limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM)), or Direct Rambus RAM (DR RAM). It should be noted that the memory in the systems and methods described in the present disclosure is intended to include but not limited to these and any other suitable types of memory.

It should be understood that the foregoing memory is exemplary but not restrictive. For example, the memory in embodiments of the present disclosure may also be Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), or Direct Rambus RAM (DR RAM), and so on. That is to say, the memory in embodiments of the present disclosure is intended to include but not limited to these and any other suitable types of memory.

FIG. 13 is a schematic block diagram of a communication system 1200 according to an embodiment of the present disclosure. As shown in FIG. 13, the communication system 1200 includes a terminal device 1210 and a network device 1220.

The terminal device 1210 may be configured to implement the corresponding functions implemented by the terminal device in the foregoing methods, and the network device 1220 may be configured to implement the corresponding functions implemented by the network device in the foregoing methods. For brevity, details are not repeated herein again.

An embodiment of the present disclosure also provides a computer-readable storage medium for storing computer programs.

According to embodiments, the computer-readable storage medium may be applied to the terminal device in embodiments of the present disclosure, and the computer programs cause a computer to perform the corresponding processes implemented by the terminal device in each method embodiment of the present disclosure. For brevity, repeated descriptions are omitted here.

According to embodiments, the computer-readable storage medium may be applied to the network device in embodiments of the present disclosure, and the computer programs cause a computer to perform the corresponding processes implemented by the network device in each method embodiment of the present disclosure. For brevity, repeated descriptions are omitted here.

An embodiment of the present disclosure provides a computer program product, including computer program instructions.

According to embodiments, the computer program product may be applied to the terminal device in embodiments of the present disclosure, and the computer program instructions cause a computer to perform the corresponding processes implemented by the terminal device in each method embodiment of the present disclosure. For brevity, repeated descriptions are omitted here.

According to embodiments, the computer program product may be applied to the network device in embodiments of the present disclosure, and the computer program instructions cause a computer to perform the corresponding processes implemented by the network device in each method embodiment of the present disclosure. For brevity, repeated descriptions are omitted here.

An embodiment of the present disclosure also provides a computer program.

According to embodiments, the computer program may be applied to the terminal device in embodiments of the present disclosure, and when the computer program runs on a computer, the computer is caused to perform the corresponding processes implemented by the terminal device in each method embodiment of the present disclosure. For brevity, repeated descriptions are omitted here.

According to embodiments, the computer program may be applied to the network device in embodiments of the present disclosure, and when the computer program runs on a computer, the computer is caused to perform the corresponding processes implemented by the network device in each method embodiment of the present disclosure. For brevity, repeated descriptions are omitted here.

Those of ordinary skill in the art will appreciate that the exemplary units and algorithm steps described according to embodiments disclosed herein can be carried out by electronic hardware or a combination of electronic hardware and computer software. Whether the functions are implemented by hardware or software depends on particular applications and design constraints of the technical solutions. For each of the particular applications, a person skilled in the art can use different methods to implement the described functions, but such implementation should not be considered as beyond the scope of the present disclosure.

It may be clearly understood by those skilled in the art that details of specific operation procedures of the systems, devices and units can be found in the previous description regarding the method embodiments.

In embodiments provided in the present disclosure, it should be understood that the disclosed systems, devices and methods may be implemented in other ways. For example, the device embodiments described above are merely illustrative. For example, the division of the units is only a kind of logical function division. In practice, other division manner may be used. For example, multiple units or components may be combined or integrated into another system, or some features may be ignored or not performed. In addition, the illustrated or discussed mutual coupling or direct coupling or communication connection may be indirect coupling or communication connection through some interfaces, devices or units, and may be in electrical, mechanical or other forms.

The units described as separated parts may or may not be physically separated, and the parts displayed as units may or may not be physical units, that is, the units may be located in one place, or may be distributed over multiple network units. Some or all of the units may be selected according to actual needs to achieve the objectives of the solutions in the embodiments.

In addition, the functional units in the embodiments of the present disclosure may be integrated in one processing unit, or the units may exist alone physically, or two or more units may be integrated in one unit.

The functions may also be stored in a computer-readable storage medium if being implemented in the form of a software functional unit and sold or used as an independent product. Based on such understanding, the essence of the technical solutions of the present disclosure, or the part contributing to the prior art or part of the technical solutions, may be embodied in the form of a software product. The computer software product is stored in a storage medium including a number of instructions such that a computer device (which may be a personal computer, a server, or a network device, etc.) performs all or part of steps of the method described in each of the embodiments of the present disclosure. The foregoing storage medium includes: any medium that is capable of storing program codes such as a USB disk, a mobile hard disk, a Read-Only Memory (ROM), a Random Access Memory (RAM), a magnetic disk or an optical disk, and the like.

The foregoing descriptions are merely exemplary embodiments of the present disclosure, but the protection scope of the present disclosure is not limited thereto. Any person skilled in the art can easily think of changes or substitutions within the technical scope of the present disclosure, and all the changes or substitutions should be covered by the protection scope of the present disclosure. Therefore, the protection scope of the present disclosure should be defied by the appended claims.

## Claims

1. A communication method, comprising:
if a physical uplink control channel (PUCCH) resource for transmitting a first scheduling request (SR) and a physical uplink shared channel (PUSCH) resource for transmitting a first media access control (MAC) protocol data unit (PDU) used by a terminal device overlap, determining, by the terminal device, whether to prioritize transmitting the first SR.

2. The method according to claim 1, wherein the determining, by the terminal device, whether to prioritize transmitting the first SR, comprises:
determining, by the terminal device, whether to prioritize transmitting the first SR according to first information;
wherein, the first information comprises at least one of the following information:
first indication information that a network device indicates whether to prioritize transmitting the first SR;
second indication information that the terminal device indicates to the network device whether it has an ability to use a first logical channel prioritization order;
a type of a first MAC control unit (CE) comprised in the first MAC PDU;
a resource attribute of the PUCCH resource;
a resource attribute of the PUSCH resource;
an attribute of a first logical channel corresponding to the first SR;
an attribute of a logical channel corresponding to the first MAC CE;
a reason for triggering the first MAC CE;
whether the PUSCH resource is capable of carrying data of the first logical channel;
a time sequence for triggering the first SR and the first MAC PDU being packetized; and
a reason for triggering a random access procedure.

3. The method according to claim 2, wherein the resource attribute of the PUCCH resource comprises at least one of the following: a priority of the PUCCH resource, an identifier of the PUCCH resource, a period of the PUCCH resource, a duration of the PUCCH resource, and a modulation and coding scheme (MCS) level corresponding to the PUCCH resource.

4. The method according to claim 2 or 3, wherein the resource attribute of the PUSCH resource comprises at least one of the following: a priority of the PUSCH resource, an identifier of the PUSCH resource, a period of the PUSCH resource, a duration of the PUSCH resource, a MCS level corresponding to the PUSCH resource, an attribute of a logical channel that the PUSCH resource is capable of carrying, and service information that the PUSCH resource is capable of carrying.

5. The method according to any one of claims 2 to 4, wherein the attribute of the logical channel comprises at least one of the following: a priority of the logical channel, an identifier of the logical channel, and service information of a service carried by the logical channel.

6. The method according to claim 5, wherein the service information comprises at least one of the following: a service priority, a service identifier, and a service type.

7. The method according to any one of claims 2 to 6, wherein information of the first logical channel is transmitted on the PUCCH resource, or the first logical channel corresponds to data that triggers the first SR; or
the logical channel corresponding to the first MAC CE corresponds to information carried in the first MAC CE, or the PUSCH resource is capable of carrying the logical channel corresponding to the first MAC CE, or the logical channel corresponding to the first MAC CE triggers the first MAC CE.

8. The method according to any one of claims 2 to 7, wherein the determining, by the terminal device, whether to prioritize transmitting the first SR according to the first information, comprises:
determining, by the terminal device, to prioritize transmitting the first SR when the first information meets at least one of the following conditions:
the first indication information indicates to prioritize transmitting the first SR by the terminal device;
the second indication information is carried in a second MAC CE and a type of the second MAC CE is a first MAC CE type;
a type of the first MAC CE is the first MAC CE type;
the priority of the PUSCH resource is lower than or equal to a first preset priority threshold;
the priority of the PUCCH resource is higher than or equal to the first preset priority threshold;
the priority of the PUSCH resource is lower than or equal to the priority of the PUCCH resource;
the identifier of the PUSCH resource is not a first resource identifier;
the identifier of the PUSCH resource is a second resource identifier;
the identifier of the PUCCH resource is the first resource identifier;
the period of the PUSCH resource is greater than or equal to a preset PUSCH period threshold;
the period of the PUCCH resource is less than or equal to a preset PUCCH period threshold;
the period of the PUSCH resource is greater than or equal to the period of the PUCCH resource;
a transmission duration of the PUSCH resource is greater than or equal to a preset PUSCH transmission duration;
a transmission duration of the PUCCH resource is less than or equal to a preset PUCCH transmission duration;
the transmission duration of the PUSCH resource is greater than or equal to the transmission duration of the PUCCH resource;
a MCS level used for transmitting the PUSCH resource is greater than or equal to a preset MCS level;
a MCS level used for transmitting the PUCCH resource is less than or equal to the preset MCS level;
the MCS level used for transmitting the PUSCH resource is greater than or equal to the MCS level used for transmitting the PUCCH resource;
the attribute of the logical channel that the PUSCH resource is capable of carrying does not meet a set attribute of the logical channel;
the service information that the PUSCH resource is capable of carrying does not meet set service information;
a priority of the logical channel corresponding to the first MAC CE is lower than or equal to a second preset priority threshold;
a priority of the first logical channel is higher than or equal to the second preset priority threshold;
the priority of the logical channel corresponding to the first MAC CE is lower than or equal to the priority of the first logical channel;
an identifier of the logical channel corresponding to the first MAC CE is not a first logical channel identifier;
the identifier of the logical channel corresponding to the first MAC CE is a second logical channel identifier;
an identifier of the first logical channel is the first logical channel identifier;
a service type of a service carried by the logical channel corresponding to the first MAC CE is not a first service type;
the service type of the service carried by the logical channel corresponding to the first MAC CE is a second service type;
a service type of a service carried by the first logical channel is the first service type;
a priority of the service carried by the logical channel corresponding to the first MAC CE is lower than or equal to a priority of the service carried by the first logical channel;
the priority of the service carried by the logical channel corresponding to the first MAC CE is lower than or equal to a preset service priority;
the priority of the service carried by the first logical channel is higher than or equal to the preset service priority;
the reason for triggering the first MAC CE is a specific reason;
the priority of the first logical channel is higher than or equal to the priority of the logical channel corresponding to the first MAC CE, and the PUSCH resource is not capable of carrying the data of the first logical channel;
the priority of the first logical channel is higher than or equal to the priority of the logical channel corresponding to the first MAC CE, and the first SR is triggered after the first MAC PDU is packetized;
the first SR is triggered before the first MAC PDU is packetized, and the PUSCH resource is not capable of carrying the data of the first logical channel;
the reason for triggering the random access procedure is positioning;
the reason for triggering the random access procedure is that in a radio resource control (RRC) connected state, uplink data arrives and there is no available uplink resource, and a logical channel that triggers the random access procedure is not a specific logical channel;
the reason for triggering the random access procedure is that in the RRC connected state, the uplink data arrives and there is no available uplink resource, and the logical channel that triggers the random access procedure is a second logical channel;
the reason for triggering the random access procedure is that in the RRC connected state, the uplink data arrives and there is no available uplink resource, and the logical channel that triggers the random access procedure is not a logical channel where a first service is located;
the reason for triggering the random access procedure is that in the RRC connected state, the uplink data arrives and there is no available uplink resource, and the logical channel that triggers the random access procedure is a logical channel where a second service is located;
the reason for triggering the random access procedure is that in the RRC connected state, the uplink data arrives and there is no available uplink resource, and the logical channel that triggers the random access procedure has a priority lower than a third preset priority threshold;
the reason for triggering the random access procedure is that in the RRC connected state, the uplink data arrives and there is no available uplink resource, and the logical channel that triggers the random access procedure has a priority lower than the priority of the first logical channel;
the reason for triggering the random access procedure is that other system information is requested by the terminal device;
the reason for triggering the random access procedure is that a time alignment (TA) is established by the terminal device when a secondary cell is added; and
the reason for triggering the random access procedure is beam failure recovery.

9. The method according to claim 8, wherein the first type of MAC CE is one of the following:
a cell-radio network temporary identity (C-RNTI) MAC CE;
a first type of MAC service data unit (SDU);
a configured grant confirmation MAC CE;
MAC CE for buffer state report (BSR) with exception of BSR included for padding;
a single entry power headroom report (PHR) MAC CE;
multiple entry PHR MAC CE;
a BSR MAC CE triggered by a service other than the first service; and
a BSR MAC CE triggered by a logical channel other than the first logical channel.

10. The method according to claim 8 or 9, wherein the first type of MAC CE is predefined, or the first type of MAC CE is determined by the terminal device, or the first type of MAC CE is configured or indicated by the network device.

11. The method according to any one of claims 8 to 10, wherein the specific reason comprises at least one of the following reasons:
the reason for triggering the first MAC CE is random access;
the first MAC CE is used for activating or deactivating configured grant;
the first MAC CE is triggered by a BSR;
the first MAC CE is triggered by a BSR of a ultra-reliable low-latency communication (URLLC); and
the first MAC CE is not triggered by the BSR of the URLLC.

12. The method according to any one of claims 2 to 11, wherein the method further comprises:
receiving, by the terminal device, a first message sent by the network device, wherein the first message comprises the first information.

13. The method according to claim 12, wherein the first message is carried in a RRC signaling, or the first message is carried in downlink control information (DCI), or the first message is carried in the MAC CE.

14. The method according to any one of claims 2 to 11, wherein the first information is predefined.

15. The method according to any one of claims 1 to 14, wherein the method further comprises:
determining, by the terminal device, whether to use a first logical channel prioritization order, when it is determined to prioritize transmitting the first SR.

16. The method according to claim 15, wherein the method further comprises:
receiving, by the terminal device, second information sent by the network device, wherein the second information is used for indicating whether the first logical channel prioritization order is used by the terminal device.

17. The method according to claim 16, wherein the second information is carried in the RRC signaling, or the second information is carried in the DCI, or the second information is carried in the MAC CE.

18. The method according to claim 15, wherein the determining, by the terminal device, whether to use the first logical channel prioritization order, comprises:
determining, by the terminal device, whether to use the first logical channel prioritization order according to predefined information.

19. The method according to any one of claims 15 to 18, wherein the determining, by the terminal device, whether to use the first logical channel prioritization order, comprises:
determining, by the terminal device, to use the first logical channel prioritization order when a first condition is met by the terminal device;
wherein the first condition is at least one of the following conditions:
the terminal device is a terminal device that configures or activates the first service or the first logical channel;
the terminal device is a terminal device that supports the first logical channel prioritization order;
the terminal device is a terminal device that configures or supports to prioritize transmitting the first SR;
the terminal device is a terminal device that determines whether to prioritize transmitting the first SR;
the terminal device is a terminal device that supports release16 (R16) and future releases;
the terminal device is a terminal device that has determined to prioritize transmitting the first SR; and
the terminal device is a terminal device that prioritizes transmitting the first SR when the PUCCH resource overlaps with other resources.

20. The method according to any one of claims 2 to 19, wherein, in the first logical channel prioritization order, a priority of data of a logical channel carrying the first service is higher than a priority of the configured grant confirmation MAC CE; and/or
in the first logical channel prioritization order, a priority of a BSR MAC CE of the first service or a BSR MAC CE of the first logical channel is higher than the priority of the configured grant confirmation MAC CE.

21. The method according to any one of claims 2 to 19, wherein in the first logical channel prioritization order, the priority of the data of the logical channel carrying the first service is higher than a priority of data carried by the C-RNTI MAC CE or the uplink common control channel; and/or
in the first logical channel prioritization order, the priority of the BSR MAC CE of the first service or the BSR MAC CE of the first logical channel is higher than the priority of the data carried by the C-RNTI MAC CE or the uplink common control channel.

22. The method according to any one of claims 1 to 21, wherein the first SR corresponds to the first logical channel, and/or the first SR is triggered by the first service.

23. The method according to any one of claims 8 to 11 and 19 to 22, wherein the first service comprises at least one of the following: a URLLC service, an Industrial Internet of Things (HOT) service, and a vertical industry service.

24. The method according to any one of claims 1 to 23, wherein the method further comprises:
instructing, by the terminal device, a physical layer to transmit the first SR if it is determined to prioritize transmitting the first SR by the terminal device.

25. The method according to claim 24, wherein the instructing, by the terminal device, the physical layer to transmit the first SR, comprises:
instructing, at a MAC layer by the terminal device, the physical layer to prioritize transmitting the first SR.

26. The method according to any one of claims 1 to 25, wherein the method further comprises:
determining, by the terminal device, to prioritize transmitting the first SR at the physical layer when the first SR is received in the physical layer.

27. The method according to any one of claims 1 to 26, wherein if it is determined to prioritize transmitting the first SR by the terminal device, the method further comprises:
indicating, at a MAC layer by the terminal device, the first MAC PDU to the physical layer.

28. A communication method, comprising:
determining, by a terminal device, whether to use a first logical channel prioritization order;
wherein, in the first logical channel prioritization order, a priority of data of a logical channel carrying a first service is higher than a priority of a configured grant media access control (MAC) control unit (CE).

29. The method according to claim 28, wherein, in the first logical channel prioritization order, the priority of the data of the logical channel carrying the first service is higher than a priority of data carried by a cell-radio network temporary identity (C-RNTI) MAC CE or an uplink common control channel.

30. The method according to claim 28 or 29, wherein the first logical channel prioritization order further comprises a priority of a buffer status report (BSR) MAC CE of the first service or a BSR MAC CE of the first logical channel.

31. The method according to claim 30, wherein in the first logical channel prioritization order, the priority of the BSR MAC CE of the first service or the BSR MAC CE of the first logical channel is higher than the priority of the data of the logical channel carrying the first service.

32. The method according to any one of claims 28 to 31, wherein the method further comprises:
receiving, by the terminal device, second information sent by a network device, wherein the second information is used for indicating whether the first logical channel prioritization order is used by the terminal device.

33. The method according to claim 32, wherein the second information is carried in a radio resource control (RRC) signaling, or the second information is carried in downlink control information (DCI), or the second information is carried in the MAC CE.

34. The method according to any one of claims 28 to 31, wherein the determining, by the terminal device, whether to use the first logical channel prioritization order, comprises:
determining, by the terminal device, whether to use the first logical channel prioritization order according to predefined information.

35. The method according to any one of claims 28 to 34, wherein the determining, by the terminal device, whether to use the first logical channel prioritization order, comprises:
determining, by the terminal device, to use the first logical channel prioritization order when a first condition is met by the terminal device;
wherein, the first condition is at least one of the following conditions:
the terminal device is a terminal device that configures or activates the first service or the first logical channel;
the terminal device is a terminal device that supports the first logical channel prioritization order;
when a physical uplink control channel (PUCCH) resource for transmitting a first scheduling request (SR) overlaps with other resources, the terminal device is a terminal device that configures or supports to prioritize transmitting the first SR;
when the PUCCH resource overlaps with other resources, the terminal device is a terminal device that determines whether to prioritize transmitting the first SR;
the terminal device is a terminal device that supports release16 (R16) and future releases;
when the PUCCH resource overlaps with other resources, the terminal device is a terminal device that has determined to prioritize transmitting the first SR; and
when the PUCCH resource overlaps with other resources, the terminal device is a terminal device that prioritizes transmitting the first SR.

36. The method according to claim 35, wherein the first SR corresponds to the first logical channel, and/or the first SR is triggered by the first service.

37. The method according to any one of claims 28 to 36, wherein the first service comprises at least one of the following: an ultra-reliable low-latency communication (URLLC) service, an Industrial Internet of Things (HOT) service, and a vertical industry service.

38. A communication method, comprising:
if a physical uplink control channel (PUCCH) resource for transmitting a first scheduling request (SR) and a physical uplink shared channel (PUSCH) resource for transmitting a first media access control (MAC) protocol data unit (PDU) used by a terminal device overlap, prioritizing, by a network device, receiving the first SR.

39. The method according to claim 38, wherein the method further comprises:
sending, by the network device, a first message to the terminal device, wherein the first message comprises first information, and the first information is used by the terminal device to determine whether to prioritize transmitting the first SR.

40. The method according to claim 39, wherein the first information comprises at least one of the following conditions:
first indication information that the network device indicates whether to prioritize transmitting the first SR;
second indication information that the terminal device indicates to the network device whether it has an ability to use a first logical channel prioritization order;
a type of a first MAC control unit (CE) comprised in the first MAC PDU;
a resource attribute of the PUCCH resource;
a resource attribute of the PUSCH resource;
an attribute of a first logical channel corresponding to the first SR;
an attribute of a logical channel corresponding to the first MAC CE;
a reason for triggering the first MAC CE;
whether the PUSCH resource is capable of carrying data of the first logical channel;
a time sequence for triggering the first SR and the first MAC PDU being packetized; and
a reason for triggering a random access procedure.

41. The method according to claim 40, wherein the resource attribute of the PUCCH resource comprises at least one of the following: a priority of the PUCCH resource, an identifier of the PUCCH resource, a period of the PUCCH resource, a duration of the PUCCH resource, and a modulation and coding scheme (MCS) level corresponding to the PUCCH resource.

42. The method according to claim 40 or 41, wherein the resource attribute of the PUSCH resource comprises at least one of the following: a priority of the PUSCH resource, an identifier of the PUSCH resource, a period of the PUSCH resource, a duration of the PUSCH resource, a MCS level corresponding to the PUSCH resource, an attribute of a logical channel that the PUSCH resource is capable of carrying, and service information that the PUSCH resource is capable of carrying.

43. The method according to any one of claims 40 to 42, wherein the attribute of the logical channel comprises at least one of the following: a priority of the logical channel, an identifier of the logical channel, and service information of a service carried by the logical channel.

44. The method according to claim 43, wherein the service information comprises at least one of the following: a service priority, a service identifier, and a service type.

45. The method according to any one of claims 40 to 44, wherein information of the first logical channel is transmitted on the PUCCH resource, or the first logical channel corresponds to data that triggers the first SR; or
the logical channel corresponding to the first MAC CE corresponds to information carried in the first MAC CE, or the PUSCH resource is capable of carrying the logical channel corresponding to the first MAC CE, or the logical channel corresponding to the first MAC CE triggers the first MAC CE.

46. The method according to any one of claims 39 to 45, wherein the first message is carried in a radio resource control (RRC) signaling, or the first message is carried in downlink control information (DCI), or the first message is carried in the MAC CE.

47. The method according to any one of claims 38 to 46, wherein the method further comprises:
sending, by the network device, second information to the terminal device, wherein the second information is used for indicating whether the first logical channel prioritization order is used by the terminal device.

48. The method according to claim 47, wherein the second information is carried in the RRC signaling, or the second information is carried in the DCI, or the second information is carried in the MAC CE.

49. The method according to any one of claims 40 to 45, 47, 48, wherein, in the first logical channel prioritization order, a priority of data of a logical channel carrying a first service is higher than a priority of a configured grant confirmation MAC CE; and/or
in the first logical channel prioritization order, a priority of a buffer status report (BSR) MAC CE of the first service or a BSR MAC CE of the first logical channel is higher than the priority of the configured grant confirmation MAC CE.

50. The method according to any one of claims 40 to 45, 47, 48, wherein, in the first logical channel prioritization order, the priority of the data of the logical channel carrying the first service is higher than a priority of data carried by a cell-radio network temporary identity (C-RNTI) MAC CE or an uplink common control channel; and/or
in the first logical channel prioritization order, the priority of the BSR MAC CE of the first service or the BSR MAC CE of the first logical channel is higher than the priority of the data carried by the C-RNTI MAC CE or the uplink common control channel.

51. The method according to any one of claims 38 to 50, wherein the method further comprises:
sending, by the network device, third information to the terminal device, wherein the third information is used for configuring or indicating a first type of MAC CE.

52. The method according to claim 51, wherein the first type of MAC CE is any one of the following:
the C-RNTI MAC CE;
a first type of MAC service data unit (SDU);
the configured grant confirmation MAC CE;
MAC CE for BSR with exception of BSR included for padding;
a single entry power headroom report (PHR) MAC CE;
multiple entry PHR MAC CE;
a BSR MAC CE triggered by a service other than the first service; and
a BSR MAC CE triggered by a logical channel other than the first logical channel.

53. The method according to any one of claims 38 to 52, wherein the first SR corresponds to the first logical channel, and/or the first SR is triggered by the first service.

54. The method according to any one of claims 49, 50, 52 and 53, wherein the first service comprises at least one of the following: an ultra-reliable low-latency communication (URLLC) service, an Industrial Internet of Things (HOT) service, and a vertical industry service.

55. A communication method, comprising:
sending, by a network device, second information to a terminal device, wherein the second information is used for indicating whether a first logical channel prioritization order is used by the terminal device;
wherein, in the first logical channel prioritization order, a priority of data of a logical channel carrying a first service is higher than a priority of a configured grant media access control (MAC) control unit (CE).

56. The method according to claim 55, wherein, in the first logical channel prioritization order, the priority of the data of the logical channel carrying the first service is higher than a priority of data carried by a cell-radio network temporary identity (C-RNTI) MAC CE or an uplink common control channel.

57. The method according to claim 55 or 56, wherein the first logical channel prioritization order further comprises a priority of a buffer status report (BSR) MAC CE of the first service or a BSR MAC CE of the first logical channel.

58. The method according to claim 57, wherein in the first logical channel prioritization order, the priority of the BSR MAC CE of the first service or the BSR MAC CE of the first logical channel is higher than the priority of the data of the logical channel carrying the first service.

59. The method according to any one of claims 55 to 58, wherein the second information is carried in a radio resource control (RRC) signaling, or the second information is carried in downlink control information (DCI), or the second information is carried in the MAC CE.

60. The method according to any one of claims 55 to 59, wherein the first service comprises at least one of the following: an ultra-reliable low-latency communication (URLLC) service, an Industrial Internet of Things (HOT) service, and a vertical industry service.

61. A terminal device, comprising:
a processing unit, configured to determine whether to prioritize transmitting a first scheduling request (SR), if a physical uplink control channel (PUCCH) resource for transmitting the first SR and a physical uplink shared channel (PUSCH) resource for transmitting a first media access control (MAC) protocol data unit (PDU) used by the terminal device overlap.

62. The terminal device according to claim 61, wherein the processing unit is specifically configured to:
determine whether to prioritize transmitting the first SR according to first information;
wherein, the first information comprises at least one of the following information:
first indication information that a network device indicates whether to prioritize transmitting the first SR;
second indication information that the terminal device indicates to the network device whether it has an ability to use a first logical channel prioritization order;
a type of a first MAC control unit (CE) comprised in the first MAC PDU;
a resource attribute of the PUCCH resource;
a resource attribute of the PUSCH resource;
an attribute of a first logical channel corresponding to the first SR;
an attribute of a logical channel corresponding to the first MAC CE;
a reason for triggering the first MAC CE;
whether the PUSCH resource is capable of carrying data of the first logical channel;
a time sequence for triggering the first SR and the first MAC PDU being packetized; and
a reason for triggering a random access procedure.

63. The terminal device according to claim 62, wherein the resource attribute of the PUCCH resource comprises at least one of the following: a priority of the PUCCH resource, an identifier of the PUCCH resource, a period of the PUCCH resource, a duration of the PUCCH resource, and a modulation and coding scheme (MCS) level corresponding to the PUCCH resource.

64. The terminal device according to claim 62 or 63, wherein the resource attribute of the PUSCH resource comprises at least one of the following: a priority of the PUSCH resource, an identifier of the PUSCH resource, a period of the PUSCH resource, a duration of the PUSCH resource, a MCS level corresponding to the PUSCH resource, an attribute of a logical channel that the PUSCH resource is capable of carrying, and service information that the PUSCH resource is capable of carrying.

65. The terminal device according to any one of claims 62 to 64, wherein the attribute of the logical channel comprises at least one of the following: a priority of the logical channel, an identifier of the logical channel, and service information of a service carried by the logical channel.

66. The terminal device according to claim 65, wherein the service information comprises at least one of the following: a service priority, a service identifier, and a service type.

67. The terminal device according to any one of claims 62 to 66, wherein information of the first logical channel is transmitted on the PUCCH resource, or the first logical channel corresponds to data that triggers the first SR; or
the logical channel corresponding to the first MAC CE corresponds to information carried in the first MAC CE, or the PUSCH resource is capable of carrying the logical channel corresponding to the first MAC CE, or the logical channel corresponding to the first MAC CE triggers the first MAC CE.

68. The terminal device according to any one of claims 62 to 67, wherein the processing unit is specifically configured to:
determine to prioritize transmitting the first SR when the first information meets at least one of the following conditions:
the first indication information indicates to prioritize transmitting the first SR by the terminal device;
the second indication information is carried in a second MAC CE and a type of the second MAC CE is a first MAC CE type;
a type of the first MAC CE is the first MAC CE type;
the priority of the PUSCH resource is lower than or equal to a first preset priority threshold;
the priority of the PUCCH resource is higher than or equal to the first preset priority threshold;
the priority of the PUSCH resource is lower than or equal to the priority of the PUCCH resource;
the identifier of the PUSCH resource is not a first resource identifier;
the identifier of the PUSCH resource is a second resource identifier;
the identifier of the PUCCH resource is the first resource identifier;
the period of the PUSCH resource is greater than or equal to a preset PUSCH period threshold;
the period of the PUCCH resource is less than or equal to a preset PUCCH period threshold;
the period of the PUSCH resource is greater than or equal to the period of the PUCCH resource;
a transmission duration of the PUSCH resource is greater than or equal to a preset PUSCH transmission duration;
a transmission duration of the PUCCH resource is less than or equal to a preset PUCCH transmission duration;
the transmission duration of the PUSCH resource is greater than or equal to the transmission duration of the PUCCH resource;
a MCS level used for transmitting the PUSCH resource is greater than or equal to a preset MCS level;
a MCS level used for transmitting the PUCCH resource is less than or equal to the preset MCS level;
the MCS level used for transmitting the PUSCH resource is greater than or equal to the MCS level used for transmitting the PUCCH resource;
the attribute of the logical channel that the PUSCH resource is capable of carrying does not meet a set attribute of the logical channel;
the service information that the PUSCH resource is capable of carrying does not meet set service information;
a priority of the logical channel corresponding to the first MAC CE is lower than or equal to a second preset priority threshold;
a priority of the first logical channel is higher than or equal to the second preset priority threshold;
the priority of the logical channel corresponding to the first MAC CE is lower than or equal to the priority of the first logical channel;
an identifier of the logical channel corresponding to the first MAC CE is not a first logical channel identifier;
the identifier of the logical channel corresponding to the first MAC CE is a second logical channel identifier;
an identifier of the first logical channel is the first logical channel identifier;
a service type of a service carried by the logical channel corresponding to the first MAC CE is not a first service type;
the service type of the service carried by the logical channel corresponding to the first MAC CE is a second service type;
a service type of a service carried by the first logical channel is the first service type;
a priority of the service carried by the logical channel corresponding to the first MAC CE is lower than or equal to a priority of the service carried by the first logical channel;
the priority of the service carried by the logical channel corresponding to the first MAC CE is lower than or equal to a preset service priority;
the priority of the service carried by the first logical channel is higher than or equal to the preset service priority;
the reason for triggering the first MAC CE is a specific reason;
the priority of the first logical channel is higher than or equal to the priority of the logical channel corresponding to the first MAC CE, and the PUSCH resource is not capable of carrying the data of the first logical channel;
the priority of the first logical channel is higher than or equal to the priority of the logical channel corresponding to the first MAC CE, and the first SR is triggered after the first MAC PDU is packetized;
the first SR is triggered before the first MAC PDU is packetized, and the PUSCH resource is not capable of carrying the data of the first logical channel;
the reason for triggering the random access procedure is positioning;
the reason for triggering the random access procedure is that in a radio resource control (RRC) connected state, uplink data arrives and there is no available uplink resource, and a logical channel that triggers the random access procedure is not a specific logical channel;
the reason for triggering the random access procedure is that in the RRC connected state, the uplink data arrives and there is no available uplink resource, and the logical channel that triggers the random access procedure is a second logical channel;
the reason for triggering the random access procedure is that in the RRC connected state, the uplink data arrives and there is no available uplink resource, and the logical channel that triggers the random access procedure is not a logical channel where a first service is located;
the reason for triggering the random access procedure is that in the RRC connected state, the uplink data arrives and there is no available uplink resource, and the logical channel that triggers the random access procedure is a logical channel where a second service is located;
the reason for triggering the random access procedure is that in the RRC connected state, the uplink data arrives and there is no available uplink resource, and the logical channel that triggers the random access procedure has a priority lower than a third preset priority threshold;
the reason for triggering the random access procedure is that in the RRC connected state, the uplink data arrives and there is no available uplink resource, and the logical channel that triggers the random access procedure has a priority lower than the priority of the first logical channel;
the reason for triggering the random access procedure is that other system information is requested by the terminal device;
the reason for triggering the random access procedure is that a time alignment (TA) is established by the terminal device when a secondary cell is added; and
the reason for triggering the random access procedure is beam failure recovery.

69. The terminal device according to claim 68, wherein the first type of MAC CE is one of the following:
a cell-radio network temporary identity (C-RNTI) MAC CE;
a first type of MAC service data unit (SDU);
a configured grant confirmation MAC CE;
MAC CE for buffer state report (BSR) with exception of BSR included for padding;
a single entry power headroom report (PHR) MAC CE;
multiple entry PHR MAC CE;
a BSR MAC CE triggered by a service other than the first service; and
a BSR MAC CE triggered by a logical channel other than the first logical channel.

70. The terminal device according to claim 68 or 69, wherein the first type of MAC CE is predefined, or the first type of MAC CE is determined by the terminal device, or the first type of MAC CE is configured or indicated by the network device.

71. The terminal device according to any one of claims 68 to 70, wherein the specific reason comprises at least one of the following reasons:
the reason for triggering the first MAC CE is random access;
the first MAC CE is used for activating or deactivating configured grant;
the first MAC CE is triggered by the BSR;
the first MAC CE is triggered by a BSR of ultra-reliable low-latency communication (URLLC); and
the first MAC CE is not triggered by the BSR of the URLLC.

72. The terminal device according to any one of claims 62 to 71, wherein the terminal device further comprises:
a communication unit, configured to receive a first message sent by the network device, wherein the first message comprises the first information.

73. The terminal device according to claim 72, wherein the first message is carried in a RRC signaling, or the first message is carried in downlink control information (DCI), or the first message is carried in the MAC CE.

74. The terminal device according to any one of claims 62 to 71, wherein the first condition is predefined.

75. The terminal device according to any one of claims 61 to 74, wherein the processing unit is further configured to:
determine whether to use a first logical channel prioritization order, when it is determined to prioritize transmitting the first SR.

76. The terminal device according to claim 75, wherein the terminal device further comprises:
a communication unit, configured to receive second information sent by the network device, wherein the second information is used for indicating whether the first logical channel prioritization order is used by the terminal device.

77. The terminal device according to claim 76, wherein the second information is carried in the RRC signaling, or the second information is carried in the DCI, or the second information is carried in the MAC CE.

78. The terminal device according to claim 75, wherein the processing unit is specifically configured to:
determine whether to use the first logical channel prioritization order according to predefined information.

79. The terminal device according to any one of claims 75 to 78, wherein the processing unit is specifically configured to:
determine to use the first logical channel prioritization order when a first condition is met by the terminal device;
wherein the first condition is at least one of the following conditions:
the terminal device is a terminal device that configures or activates the first service or the first logical channel;
the terminal device is a terminal device that supports the first logical channel prioritization order;
the terminal device is a terminal device that configures or supports to prioritize transmitting the first SR;
the terminal device is a terminal device that determines whether to prioritize transmitting the first SR;
the terminal device is a terminal device that supports release16 (R16) and future releases;
the terminal device is a terminal device that has determined to prioritize transmitting the first SR; and
the terminal device is a terminal device that prioritizes transmitting the first SR when the PUCCH resource overlaps with other resources.

80. The terminal device according to any one of claims 62 to 79, wherein, in the first logical channel prioritization order, a priority of data of a logical channel carrying the first service is higher than a priority of the configured grant confirmation MAC CE; and/or
in the first logical channel prioritization order, a priority of a BSR MAC CE of the first service or a BSR MAC CE of the first logical channel is higher than the priority of the configured grant confirmation MAC CE.

81. The terminal device according to any one of claims 62 to 79, wherein in the first logical channel prioritization order, the priority of the data of the logical channel carrying the first service is higher than a priority of data carried by the C-RNTI MAC CE or the uplink common control channel; and/or
in the first logical channel prioritization order, the priority of the BSR MAC CE of the first service or the BSR MAC CE of the first logical channel is higher than the priority of the data carried by the C-RNTI MAC CE or the uplink common control channel.

82. The terminal device according to any one of claims 61 to 81, wherein the first SR corresponds to the first logical channel, and/or the first SR is triggered by the first service.

83. The terminal device according to any one of claims 68 to 71 and 79 to 82, wherein the first service comprises at least one of the following: a URLLC service, an Industrial Internet of Things (HOT) service, and a vertical industry service.

84. The terminal device according to any one of claims 61 to 83, wherein the processing unit is further configured to:
instruct a physical layer to transmit the first SR if it is determined to prioritize transmitting the first SR.

85. The terminal device according to claim 84, wherein the processing unit is specifically configured to:
instruct, at a MAC layer, the physical layer to prioritize transmitting the first SR.

86. The terminal device according to any one of claims 61 to 85, wherein the processing unit is further configured to:
determine, at the physical layer, to prioritize transmitting the first SR when the first SR is received in the physical layer.

87. The terminal device according to any one of claims 61 to 86, wherein, when it is determined by the processing unit to prioritize transmitting the first SR, the processing unit is further configured to:
indicate, at the MAC layer, the first MAC PDU to the physical layer.

88. A terminal device, **characterized by** comprising:
a processing unit, determining whether to use a first logical channel prioritization order;
wherein, in the first logical channel prioritization order, a priority of data of a logical channel carrying a first service is higher than a priority of a configured grant media access control (MAC) control unit (CE).

89. The terminal device according to claim 88, wherein, in the first logical channel prioritization order, the priority of the data of the logical channel carrying the first service is higher than a priority of data carried by a cell-radio network temporary identity (C-RNTI) MAC CE or an uplink common control channel.

90. The terminal device according to claim 88 or 89, wherein the first logical channel prioritization order further comprises a priority of a buffer status report (BSR) MAC CE of the first service or a BSR MAC CE of the first logical channel.

91. The terminal device according to claim 90, wherein in the first logical channel prioritization order, the priority of the BSR MAC CE of the first service or the BSR MAC CE of the first logical channel is higher than the priority of the data of the logical channel carrying the first service.

92. The terminal device according to any one of claims 88 to 91, wherein the terminal device further comprises:
a communication unit, configured to receive second information sent by the network device, wherein the second information is used for indicating whether the first logical channel prioritization order is used by the terminal device.

93. The terminal device according to claim 92, wherein the second information is carried in a radio resource control (RRC) signaling, or the second information is carried in downlink control information (DCI), or the second information is carried in the MAC CE.

94. The terminal device according to any one of claims 88 to 91, wherein the processing unit is specifically configured to:
determine whether to use the first logical channel prioritization order according to predefined information.

95. The terminal device according to any one of claims 88 to 94, wherein the processing unit is specifically configured to:
determine to use the first logical channel prioritization order when a first condition is met by the terminal device;
wherein, the first condition is at least one of the following conditions:
the terminal device is a terminal device that configures or activates the first service or the first logical channel;
the terminal device is a terminal device that supports the first logical channel prioritization order;
a physical uplink control channel (PUCCH) resource for transmitting a first scheduling request (SR) overlaps with other resources, and the terminal device is a terminal device that configures or supports to prioritize transmitting the first SR;
the PUCCH resource overlaps with other resources, and the terminal device is a terminal device that determines whether to prioritize transmitting the first SR;
the terminal device is a terminal device that supports release16 (R16) and future releases;
the PUCCH resource overlaps with other resources, and the terminal device is a terminal device that has determined to prioritize transmitting the first SR; and
the PUCCH resource overlaps with other resources, and the terminal device is a terminal device that prioritizes transmitting the first SR.

96. The terminal device according to claim 95, wherein the first SR corresponds to the first logical channel, and/or the first SR is triggered by the first service.

97. The terminal device according to any one of claims 88 to 96, wherein the first service comprises at least one of the following: an ultra-reliable low-latency communication (URLLC) service, an Industrial Internet of Things (HOT) service, and a vertical industry service.

98. A network device, comprising:
a communication unit, configured to prioritize receiving a first scheduling request (SR), if a physical uplink control channel (PUCCH) resource for transmitting the first SR and a physical uplink shared channel (PUSCH) resource for transmitting a first media access control (MAC) protocol data unit (PDU) used by a terminal device overlap.

99. The network device according to claim 98, wherein the communication unit is further configured to:
send a first message to the terminal device, wherein the first message comprises first information, and the first information is used by the terminal device to determine whether to prioritize transmitting the first SR.

100. The network device according to claim 99, wherein the first information comprises at least one of the following information:
first indication information that the network device indicates whether to prioritize transmitting the first SR;
second indication information that the terminal device indicates to the network device whether it has an ability to use a first logical channel prioritization order;
a type of a first MAC control unit (CE) comprised in the first MAC PDU;
a resource attribute of the PUCCH resource;
a resource attribute of the PUSCH resource;
an attribute of a first logical channel corresponding to the first SR;
an attribute of a logical channel corresponding to the first MAC CE;
a reason for triggering the first MAC CE;
whether the PUSCH resource is capable of carrying data of the first logical channel;
a time sequence for triggering the first SR and the first MAC PDU being packetized; and
a reason for triggering a random access procedure.

101. The network device according to claim 100, wherein the resource attribute of the PUCCH resource comprises at least one of the following: a priority of the PUCCH resource, an identifier of the PUCCH resource, a period of the PUCCH resource, a duration of the PUCCH resource, and a modulation and coding scheme (MCS) level corresponding to the PUCCH resource.

102. The network device according to claim 100 or 101, wherein the resource attribute of the PUSCH resource comprises at least one of the following: a priority of the PUSCH resource, an identifier of the PUSCH resource, a period of the PUSCH resource, a duration of the PUSCH resource, a MCS level corresponding to the PUSCH resource, an attribute of a logical channel that the PUSCH resource is capable of carrying, and service information that the PUSCH resource is capable of carrying.

103. The network device according to any one of claims 100 to 102, wherein the attribute of the logical channel comprises at least one of the following: a priority of the logical channel, an identifier of the logical channel, and service information of a service carried by the logical channel.

104. The network device according to claim 103, wherein the service information comprises at least one of the following: a service priority, a service identifier, and a service type.

105. The network device according to any one of claims 100 to 104, wherein information of the first logical channel is transmitted on the PUCCH resource, or the first logical channel corresponds to data that triggers the first SR; or
the logical channel corresponding to the first MAC CE corresponds to information carried in the first MAC CE, or the PUSCH resource is capable of carrying the logical channel corresponding to the first MAC CE, or the logical channel corresponding to the first MAC CE triggers the first MAC CE.

106. The network device according to any one of claims 99 to 105, wherein the first message is carried in a radio resource control (RRC) signaling, or the first message is carried in downlink control information (DCI), or the first message is carried in the MAC CE.

107. The network device according to any one of claims 98 to 106, wherein the communication unit is further configured to:
send second information to the terminal device, wherein the second information is used for indicating whether the first logical channel prioritization order is used by the terminal device.

108. The network device according to claim 107, wherein the second information is carried in the RRC signaling, or the second information is carried in the DCI, or the second information is carried in the MAC CE.

109. The network device according to any one of claims 100 to 105, 107, and 108, wherein, in the first logical channel prioritization order, a priority of data of a logical channel carrying a first service is higher than a priority of a configured grant confirmation MAC CE; and/or
in the first logical channel prioritization order, a priority of a buffer status report (BSR) MAC CE of the first service or a BSR MAC CE of the first logical channel is higher than the priority of the configured grant confirmation MAC CE.

110. The network device according to any one of claims 100 to 105, 107, 108, wherein, in the first logical channel prioritization order, the priority of the data of the logical channel carrying the first service is higher than a priority of data carried by a cell-radio network temporary identity (C-RNTI) MAC CE or an uplink common control channel; and/or
in the first logical channel prioritization order, the priority of the BSR MAC CE of the first service or the BSR MAC CE of the first logical channel is higher than the priority of the data carried by the C-RNTI MAC CE or the uplink common control channel.

111. The network device according to any one of claims 98 to 110, wherein the communication unit is further configured to:
send third information to the terminal device, wherein the third information is used for configuring or indicating a first type of MAC CE.

112. The network device according to claim 111, wherein the first type of MAC CE is any one of the following:
the C-RNTI MAC CE;
a first type of MAC service data unit (SDU);
the configured grant confirmation MAC CE;
MAC CE for BSR with exception of BSR included for padding;
a single entry power headroom report (PHR) MAC CE;
multiple entry PHR MAC CE;
a BSR MAC CE triggered by a service other than the first service; and
a BSR MAC CE triggered by a logical channel other than the first logical channel.

113. The network device according to any one of claims 98 to 112, wherein the first SR corresponds to the first logical channel, and/or the first SR is an SR triggered by the first service.

114. The network device according to any one of claims 109, 110, 112 and 113, wherein the first service comprises at least one of the following: an ultra-reliable low-latency communication (URLLC) service, an Industrial Internet of Things (HOT) service, and a vertical industry service.

115. A network device, comprising:
a communication unit, configured to send second information to a terminal device, wherein the second information is used for indicating whether a first logical channel prioritization order is used by the terminal device;
wherein, in the first logical channel prioritization order, a priority of data of a logical channel carrying a first service is higher than a priority of a configured grant media access control (MAC) control unit (CE).

116. The network device according to claim 115, wherein, in the first logical channel prioritization order, the priority of the data of the logical channel carrying the first service is higher than a priority of data carried by a cell-radio network temporary identity (C-RNTI) MAC CE or an uplink common control channel.

117. The network device according to claim 115 or 116, wherein the first logical channel prioritization order further comprises a priority of a buffer status report (BSR) MAC CE of the first service or a BSR MAC CE of the first logical channel.

118. The network device according to claim 117, wherein in the first logical channel prioritization order, the priority of the BSR MAC CE of the first service or the BSR MAC CE of the first logical channel is higher than the priority of the data of the logical channel carrying the first service.

119. The network device according to any one of claims 115 to 118, wherein the second information is carried in a radio resource control (RRC) signaling, or the second information is carried in downlink control information (DCI), or the second information is carried in the MAC CE.

120. The network device according to any one of claims 115 to 119, wherein the first service comprises at least one of the following: an ultra-reliable low-latency communication (URLLC) service, an Industrial Internet of Things (HOT) service, and a vertical industry service.

121. A terminal device, comprising a processor and a memory configured to store a computer program, wherein the processor is configured to call and run the computer program stored in the memory to perform the method according to any one of claims 1 to 27.

122. A terminal device, comprising a processor and a memory configured to store a computer program, wherein the processor is configured to call and run the computer program stored in the memory to perform the method according to any one of claims 28 to 37.

123. A network device, comprising a processor and a memory configured to store a computer program, wherein the processor is configured to call and run the computer program stored in the memory to perform the method according to any one of claims 38 to 54.

124. A network device, comprising a processor and a memory configured to store a computer program, wherein the processor is configured to call and run the computer program stored in the memory to perform the method according to any one of claims 55 to 60.

125. A device, comprising: a processor configured to call and run a computer program stored in a memory, so as to cause a device in which a chip is installed to perform the method according to any one of claims 1 to 27.

126. A device, comprising: a processor configured to call and run a computer program stored in a memory, so as to cause a device in which a chip is installed to perform the method according to any one of claims 28 to 37.

127. A device, comprising: a processor configured to call and run a computer program stored in a memory, so as to cause a device in which a chip is installed to perform the method according to any one of claims 38 to 54.

128. A device, comprising: a processor configured to call and run a computer program stored in a memory, so as to cause a device in which a chip is installed to perform the method according to any one of claims 55 to 60.

129. A computer-readable storage medium, configured to store a computer program, wherein the computer program is configured to cause a computer to perform the method according to any one of claims 1 to 27.

130. A computer-readable storage medium, configured to store a computer program, wherein the computer program is configured to cause a computer to perform the method according to any one of claims 28 to 37.

131. A computer-readable storage medium, configured to store a computer program, wherein the computer program is configured to cause a computer to perform the method according to any one of claims 38 to 54.

132. A computer-readable storage medium, configured to store a computer program, wherein the computer program is configured to cause a computer to perform the method according to any one of claims 55 to 60.

133. A computer program product, comprising computer program instructions that cause a computer to perform the method according to any one of claims 1 to 27.

134. A computer program product, comprising computer program instructions that cause a computer to perform the method according to any one of claims 28 to 37.

135. A computer program product, comprising computer program instructions that cause a computer to perform the method according to any one of claims 38 to 54.

136. A computer program product, comprising computer program instructions that cause a computer to perform the method according to any one of claims 55 to 60.

137. A computer program, configured to cause a computer to perform the method according to any one of claims 1 to 27.

138. A computer program, configured to cause a computer to perform the method according to any one of claims 28 to 37.

139. A computer program, configured to cause a computer to perform the method according to any one of claims 38 to 54.

140. A computer program, configured to cause a computer to perform the method according to any one of claims 55 to 60.
